# EUROPEAN PATENT APPLICATION

(11) **EP 4 517 866 A1**
(43) Date of publication of application: **05.03.2025**
(21) Application number: 24179543.4
(22) Date of filing: 03.06.2024
(51) Int. Cl.: H01M 4/136, H01M 4/36, H01M 4/58, H01M 4/62, H01M 10/0525, H01M 10/0562, H01M 4/38, H01M 4/04, H01M 4/02

(54) **DRY CATHODE FILM, DRY CATHODE INCLUDING THE SAME, AND ALL-SOLID SECONDARY BATTERY INCLUDING THE DRY CATHODE FILM**

(30) Priority: 04.09.2023 KR 20230117223
(71) Applicant: Samsung SDI Co., Ltd., Yongin-si, Gyeonggi-do 17084 (KR)
(72) Inventor: Jo, Sungnim, 17084 Yongin-si, Gyeonggi-do (KR); Son, Inhyuk, 17084 Yongin-si, Gyeonggi-do (KR); Park, Taehyun, 17084 Yongin-si, Gyeonggi-do (KR); Lim, Hyungsub, 17084 Yongin-si, Gyeonggi-do (KR); Shim, Kyueun, 17084 Yongin-si, Gyeonggi-do (KR); Lee, Jieun, 17084 Yongin-si, Gyeonggi-do (KR)
(74) Representative: Michalski Hüttermann & Partner Patentanwälte mbB

(57) **Abstract**

A dry cathode film includes a first dry cathode active material layer adjacent to a cathode current collector, and a second dry cathode active material layer on the first dry cathode active material layer. The first dry cathode active material layer and the second dry cathode active material layer each independently include a dry cathode active material including a composite of Li₂S, a lithium salt, and a carbon-based material; a dry sulfide-based solid electrolyte; and a dry binder. A content of the dry cathode active material in the first dry cathode active material layer is greater than a content of the dry cathode active material in the second dry cathode active material layer, and a content of the dry sulfide-based solid electrolyte in the first dry cathode active material layer is less than a content of the dry sulfide-based solid electrolyte in the second dry cathode active material layer.

## Description

### CROSS-REFERENCE TO RELATED APPLICATION

The present application claims priority to and the benefit of Korean Patent Application No. 10-2023-0117223, filed on September 04, 2023, in the Korean Intellectual Property Office, the entire content of which is incorporated herein by reference.

### BACKGROUND

### 1. Field

One or more embodiments of the present disclosure relate to a dry cathode film, a dry cathode including the dry cathode film, and an all-solid secondary battery including the dry cathode film.

### 2. Description of the Related Art

In order to achieve miniaturization and/or relatively high performance of one or more suitable electronic devices and/or electric vehicles, with miniaturization and/or weight reduction of second batteries, relatively high energy density (battery energy density) is becoming important and/or attractive. For example, high-capacity secondary batteries are becoming important and/or desirable.

In electrodes prepared from a slurry including a solvent, an excessive amount of solvent is utilized in preparing the electrode. The application of dry methods that eliminate the utilization of such organic solvent is under review and/or investigated and may be desired.

### SUMMARY

One or more aspects of embodiments of the present disclosure are directed toward a dry cathode film including a composite of Li₂S, a lithium salt, a carbon-based material, and a dry binder binding the Li₂S, the lithium salt, and the carbon-based material, wherein, by including a plurality of cathode active material layers having different compositions, the dry cathode film has improved mechanical properties and reduced resistivity.

One or more aspects of embodiments of the present disclosure include a dry cathode including the dry cathode film.

One or more aspects of embodiments of the present disclosure include an all-solid secondary battery including the dry cathode film.

Additional aspects will be set forth in part in the description which follows and, in part, will be apparent from the description, or may be learned by practice of the presented embodiments of the present disclosure.

According to one or more embodiments of the present disclosure, a dry cathode film configured to be on (e.g., disposed on) a cathode current collector includes a first dry cathode active material layer adjacent to the cathode current collector, and a second dry cathode active material layer on the first dry cathode active material layer, wherein the first dry cathode active material layer and the second dry cathode active material layer each independently include a dry cathode active material, a dry sulfide-based solid electrolyte, and a dry binder, wherein the dry cathode active material includes a composite of Li₂S, a lithium salt, and a carbon-based material, a content (e.g., amount or weight ratio) of the dry cathode active material in the first dry cathode active material layer is greater than a content (e.g., amount or weight ratio) of the dry cathode active material in the second dry cathode active material layer, and a content (e.g., amount or weight ratio) of the dry sulfide-based solid electrolyte in the first dry cathode active material layer is less than a content (e.g., amount or weight ratio) of the dry sulfide-based solid electrolyte in the second dry cathode active material layer.

According to one or more embodiments of the present disclosure, a dry cathode includes a cathode current collector, and the dry electrode film (i.e., the dry cathode film) on at least one surface (e.g., one surface or two opposite surfaces) of the cathode current collector.

According to one or more embodiments of the present disclosure, an all-solid secondary battery includes a cathode, an anode, and an electrolyte layer between the cathode and the anode, wherein the cathode is the dry cathode, and the anode includes an anode current collector and a first anode active material layer on a surface (e.g., one surface) of the anode current collector.

### BRIEF DESCRIPTION OF THE DRAWINGS

The accompanying drawing is included to provide a further understanding of the present disclosure, and is incorporated in and constitutes a part of this specification. The drawing illustrates example embodiments of the present disclosure and, together with the description, serve to explain principles of present disclosure. The above and other aspects, features, and advantages of certain embodiments of the present disclosure will be more apparent from the following description taken in conjunction with the accompanying drawings, in which:
FIG. 1A is a cross-sectional view of a dry cathode film according to one or more embodiments of the present disclosure;
FIG.1B is a cross-sectional view of a dry cathode film according to one or more embodiments of the present disclosure;
FIG. 1C is a cross-sectional view of a dry cathode film according to one or more embodiments of the present disclosure;
FIG.1D is a cross-sectional view of a dry cathode film according to embodiments;
FIG.1E is a cross-sectional view of a dry cathode film according to one or more embodiments of the present disclosure;
FIG. 2A is a schematic graph showing substantially continuous concentration changes of components in a thickness direction of a dry cathode film according to one or more embodiments of the present disclosure;
FIG. 2B is a schematic graph showing a stepwise concentration change of a dry cathode active material in a thickness direction of a dry cathode film according to one or more embodiments of the present disclosure;
FIG. 2C is a schematic graph showing a stepwise concentration change of a dry solid electrolyte in a thickness direction of a dry cathode film according to one or more embodiments of the present disclosure;
FIG. 3 is a cross-sectional view of a dry cathode according to one or more embodiments of the present disclosure;
FIG. 4 is a cross-sectional view of an all-solid secondary battery according to one or more embodiments of the present disclosure;
FIG. 5 is a cross-sectional view of an all-solid secondary battery according to one or more embodiments of the present disclosure;
FIG. 6 is a cross-sectional view of an all-solid secondary battery according to one or more embodiments of the present disclosure;
FIG. 7 is a cross-sectional view of an all-solid secondary battery according to one or more embodiments of the present disclosure;
FIG. 8 is a cross-sectional view of an all-solid secondary battery according to one or more embodiments of the present disclosure;
FIG. 9 is a cross-sectional view of an all-solid secondary battery according to one or more embodiments of the present disclosure; and
FIG. 10 is a cross-sectional view of an all-solid secondary battery according to one or more embodiments of the present disclosure.

### DETAILED DESCRIPTION

Reference will now be made in more detail to embodiments, examples of which are illustrated in the accompanying drawings, wherein like reference numerals refer to like elements throughout the present disclosure, and duplicative descriptions thereof may not be provided for conciseness. In this regard, the embodiments of the present disclosure may have different forms and should not be construed as being limited to the descriptions set forth herein. Accordingly, the embodiments of the present disclosure are merely described, by referring to the drawings, to explain aspects of the present disclosure. As utilized herein, the term "and/or" or "or" may include any and all combinations of one or more of the associated listed items. Expressions such as "at least one of," "one of," and "selected from," when preceding a list of elements, modify the entire list of elements and do not modify the individual elements of the list. For example, "at least one of a, b or c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation.

Unless otherwise defined, all terms (including technical and scientific terms) utilized in the present disclosure have the same meaning as commonly understood by one of ordinary skill in the art to which the present disclosure belongs. In some embodiments, it will be further understood that terms, such as those defined in commonly utilized dictionaries, should be interpreted as having a meaning that is consistent with their meaning in the context of the relevant art and the present disclosure, and will not be interpreted in an idealized or overly formal sense unless expressly so defined herein.

Embodiments are described in the present disclosure with reference to cross-sectional views which are schematic diagrams of idealized embodiments. As such, variations from the shapes of the illustrations as a result, for example, of manufacturing techniques and/or tolerances, may be to be expected. In some embodiments, the embodiments described in the present disclosure should not be construed as limited to the particular shapes regions of illustrated in the present disclosure but may include deviations in shapes that result, for example, from manufacturing. For example, regions illustrated or described as being flat may be typically rough and/or have nonlinear features. Moreover, sharp-drawn angles may be round. Thus, regions illustrated in the drawings are schematic in nature and their shapes are not intended to illustrate or limit the actual shape of a region and thus are not intended to limit the scope of the claims.

The present may, however, be embodied in different forms and should not be construed as limited to the embodiments described in the present disclosure. These embodiments are provided so that the present disclosure will be thorough and complete, and will fully convey the scope of the present disclosure to those skilled in the art. Like reference numerals designate like elements.

When it is described that an element is "on" another element, it will be understood that the element may be disposed directly on another element or still another element (e.g., one or more intervening elements) may be interposed therebetween. In contrast, when it is described that an element is "directly on" another element, still another element (e.g., an intervening element) is not interposed therebetween.

It will be understood that, although the terms "first," "second," and "third" may be utilized herein to describe one or more suitable elements, components, regions, layers, and/or sections, these elements, components, regions, layers, and/or sections should not be limited by these terms. These terms are only utilized to distinguish one element, component, region, layer, or section from another element, component, region, layer, or section. In some embodiments, a first element, component, region, layer, or section described may be termed a second element, component, region, layer, or section without departing from the teachings of the present disclosure.

The term utilized herein is intended to describe only a specific embodiment and is not intended to limit the present disclosure. As utilized herein, the singular forms "a," "an," and "the" are intended to include the plural forms, including "at least one," unless the content clearly indicates otherwise. "At least one" should not be construed as being limited to the singular. The terms "include(s)," "including," "comprise(s)," "comprising," "have/has," and/or "having" when utilized in the detailed description, specify a presence of stated features, regions, integers, steps, operations, elements, and/or components, but do not preclude the presence or addition of one or more other features, regions, integers, steps, operations, elements, components, and/or groups thereof. Further, the utilization of "may" when describing embodiments of the present disclosure may refer to "one or more embodiments of the present disclosure".

Spatially relative terms such as "beneath," "below," "lower," "above," and "upper" may be utilized herein to easily describe one element or feature's relationship to another element or feature. It will be understood that the spatially relative terms are intended to encompass different orientations of a device in utilization or operation in addition to the orientation illustrated in the drawings. For example, when a device in the drawings is turned over, elements described as "below" or "beneath" other elements or features would then be "above" or "over" the other elements or features. In some embodiments, the example term "below" may encompass both (e.g., opposite) orientations of above and below. The device may be otherwise oriented (e.g., rotated 90 degrees or at other orientations), and the spatially relative terms utilized herein may be interpreted accordingly.

In the present disclosure, the term "dry" or "dry type or kind" may refer to a state that is not intentionally in contact with a solvent such as a process solvent or a state that does not intentionally include a solvent. For example, a dry cathode active material may refer to a cathode active material that is not intentionally in contact with a solvent or a cathode active material that does not intentionally include a solvent. For example, a dry solid electrolyte refers to a solid electrolyte that is not intentionally in contact with a solvent or a solid electrolyte that does not intentionally include a solvent. For example, a dry conductive material refers to a conductive material that is not intentionally in contact with a solvent or a conductive material that does not intentionally include a solvent. For example, a dry binder refers to a conductive material that is not intentionally in contact with a solvent or a binder that does not intentionally include a solvent. For example, a binder in a liquid state at room temperature without being mixed with a solvent is a dry binder.

As utilized herein, "Group" refers to a group of the periodic table of the elements according to the International Union of Pure and Applied Chemistry ("IUPAC") Groups 1-18 group classification system.

In the present disclosure, the term "particle diameter" refers to an average diameter when particles are spherical or refers to an average major axis length when particles are non-spherical. A particle diameter may be measured by utilizing a particle size analyzer (PSA). A "particle diameter" may be, for example, an average particle diameter. An "average particle diameter" refers to, for example, a median particle diameter (D50).

D50 refers to a particle size corresponding to a 50 % cumulative volume when a particle size distribution measured through a laser diffraction method is calculated from particles having a smaller particle size to particles having a larger particle size.

D90 refers to a particle size corresponding to a 90 % cumulative volume when a particle size distribution measured through a laser diffraction method is calculated from particles having a smaller particle size to particles having a larger particle size.

D10 refers to a particle size corresponding to a 10 % cumulative volume when a particle size distribution measured through a laser diffraction method is calculated from particles having a smaller particle size to particles having a larger particle size.

The term "metal" as utilized herein may include all of metals and metalloids such as silicon and germanium in an elemental or ionic state.

The term "alloy" as utilized herein may refer to a mixture of two or more metals.

The term "electrode active material" as utilized herein may refer to an electrode material that may undergo lithiation and delithiation.

The term "cathode active material" as utilized herein may refer to a cathode material that may undergo lithiation and delithiation.

The term "anode active material" as utilized herein may refer to an anode material that may undergo lithiation and delithiation.

The terms "lithiate" and "lithiating" as utilized herein may refer to a process of adding lithium to an electrode active material.

The terms "delithiate" and "delithiating" as utilized herein may refer to a process of removing lithium from an electrode active material.

The terms "charge" and "charging" as utilized herein may refer to a process of providing electrochemical energy to a battery.

The terms "discharge" and "discharging" as utilized herein may refer to a process of removing electrochemical energy from a battery.

The terms "positive electrode" and "cathode" as utilized herein may refer to an electrode at which electrochemical reduction and lithiation occur during a discharging process.

The terms "negative electrode" and "anode" as utilized herein may refer to an electrode at which electrochemical oxidation and delithiation occur during a discharging process.

While example embodiments will be described, alternatives, modifications, variations, improvements, and substantial equivalents that are or may be presently unforeseen may arise to applicants or others skilled in the art. In some embodiments, the appended claims as filed and as they may be amended are intended to embrace all such alternatives, modifications, variations, improvements, and substantial equivalents.

Hereinafter, a dry cathode film, a dry cathode including the dry cathode film, and an all-solid secondary battery including the dry cathode film according to one or more embodiments will be described in more detail.

### Dry cathode film

A dry cathode film according to one or more embodiments may be configured to be on (e.g., disposed on) a cathode current collector. The dry cathode film may include a first dry cathode active material layer adjacent to the cathode current collector and a second dry cathode active material layer on the first dry cathode active material layer. The first dry cathode active material layer and the second dry cathode active material layer may each independently include a dry cathode active material (e.g., in a form of particles), a dry sulfide-based solid electrolyte (e.g., in a form of particles), and a dry binder. The dry cathode active material may include a composite of Li₂S, a lithium salt, and a carbon-based material. A content (e.g., amount or weight ratio) of the dry cathode active material in the first dry cathode active material layer may be greater than a content (e.g., amount or weight ratio) of the dry cathode active material in the second dry cathode active material layer. A content (e.g., amount or weight ratio) of the dry sulfide-based solid electrolyte in the first dry cathode active material layer may be less than a content (e.g., amount or weight ratio) of the dry sulfide-based solid electrolyte in the second dry cathode active material layer. The first dry cathode active material layer may be disposed adjacent to the cathode current collector, and thus the second dry cathode active material layer may be disposed adjacent to, for example, an electrolyte layer.

The content (e.g., amount or weight ratio) of the dry cathode active material in the first dry cathode active material layer disposed adjacent to the cathode current collector may be greater than the content (e.g., amount or weight ratio) of the dry cathode active material in the second dry cathode active material layer disposed adjacent to the electrolyte layer so that interfacial resistance between the cathode current collector and the dry cathode film may be more effectively reduced. The dry cathode active material may include the composite of Li₂S, the lithium salt, and the carbon-based material, and thus if (e.g., when) the content (e.g., amount or weight ratio) of the dry cathode active material in the first dry cathode active material layer increases, the electronic conductivity of the first dry cathode active material layer may increase. In one or more embodiments, electronic conduction between the cathode current collector and the dry cathode film may become easier and/or enhanced, and thus the reversibility of an electrode reaction may be further improved.

The content (e.g., amount or weight ratio) of the dry sulfide-based solid electrolyte in the first dry cathode active material layer disposed adjacent to the cathode current collector may be less than the content (e.g., amount or weight ratio) of the dry sulfide-based solid electrolyte in the second dry cathode active material layer disposed adjacent to the electrolyte layer so that interfacial resistance between the electrolyte layer and the dry cathode film may more effectively reduced. As the content (e.g., amount or weight ratio) of the dry sulfide-based solid electrolyte of the second dry cathode active material layer disposed adjacent to the electrolyte layer increases, the ionic conductivity of the second dry cathode active material layer may increase. In one or more embodiments, ion conduction between the electrolyte layer and the dry cathode film may become easier and/or increased, and thus the reversibility of an electrode reaction may be further improved.

The dry cathode active material may include the composite of Li₂S, the lithium salt, and the carbon-based material and thus may provide improved discharge capacity and improved ionic conductivity and electronic conductivity. The composite may include Li₂S, and Li₂S may serve as a lithium source so that the provision of a lithium source by an anode may not be provided. In one or more embodiments, the energy density of an all-solid secondary battery may be improved. In some embodiments, the composite may include sulfur (S) and may not include (e.g., may exclude) lithium and thus may not serve as a lithium source, which may make it necessary for an anode to provide a lithium source. The composite may include the lithium salt so that the ionic conductivity of the dry cathode active material may be improved and the internal resistance of the dry cathode film including the dry cathode active material may be reduced. In one or more embodiments, the cycle characteristics of an all-solid secondary battery including the dry cathode film may be improved. The composite may include the carbon-based material so that the electronic conductivity of the dry cathode active material may be improved and the internal resistance of the dry cathode film including the dry cathode active material may be reduced. In one or more embodiments, the cycle characteristics of an all-solid secondary battery including the dry cathode film may be improved. The composite may include the carbon-based material, and thus a binding force between the composite and the dry binder may be further improved. For example, mechanical properties such as tensile strength of the dry cathode film may be further improved. In present disclosure, "not including a or any 'component'" "excluding a or any 'component'", "'component'-free", and/or the like refers to that the "component" not being added, selected or utilized as a component in the composition, but the "component" of less than a suitable amount may still be included due to other impurities and/or external factors.

The dry binder may be intermittently bonded to a portion of a surface of a plurality of dry cathode active material particles so that an increase in internal resistance of the dry cathode film due to the dry binder may be effectively suppressed or reduced. In some comparative embodiments, in a process in which a wet binder is dissolved in a solvent and then dried, the wet binder may be widely applied on a surface of a plurality of cathode active material particles and thus may considerably increase the internal resistance of a dry cathode film. In one or more embodiments, the dry cathode film may include the dry sulfide-based solid electrolyte, and thus the ionic conductivity of the dry cathode film may be further improved. In one or more embodiments, the internal resistance of the dry cathode film, for example, the surface resistivity thereof, may be further reduced. The internal resistance of the dry cathode film may be reduced, and the mechanical properties thereof may be improved, thereby improving the specific capacity and/or cycle characteristics of an all-solid secondary battery including the dry cathode film of the present disclosure.

For example, in one or more embodiments, the internal resistance of the all-solid secondary battery including such a dry cathode film may be reduced, and the cycle characteristics of the all-solid secondary battery may be improved.

### Dry cathode film: Multi-layer structure

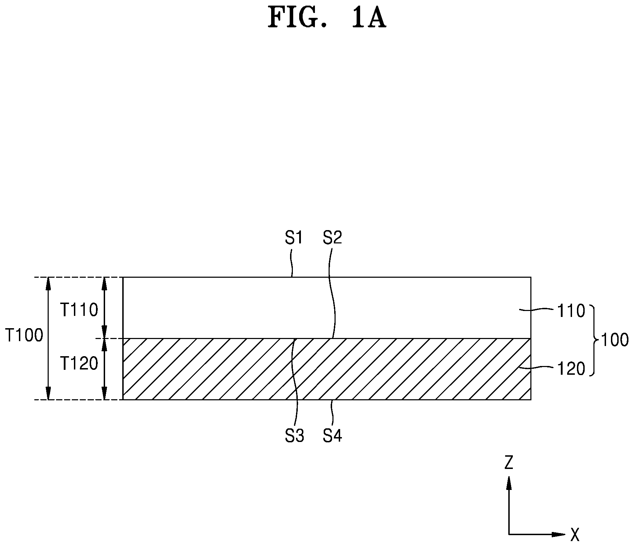

FIGs. 1A to 1E are each a schematic view illustrating a dry cathode film 100 according to one or more embodiments of the present disclosure. Referring to FIGs. 1A to 1E, an x direction may be a longitudinal direction of the dry cathode film 100, and a z direction may be a thickness direction of the dry cathode film 100.

Referring to FIGs. 1A to 1E, the dry cathode film 100 may include a first dry cathode active material layer 110 adjacent to a cathode current collector, and a second dry cathode active material layer 120 disposed on the first dry cathode active material layer 110. The first dry cathode active material layer 110 and the second dry cathode active material layer 120 may each independently include a dry cathode active material (e.g., in a form of particles), a dry sulfide-based solid electrolyte (e.g., in a form of particles), and a dry binder. The dry cathode active material may include a composite of Li₂S, a lithium salt, and a carbon-based material. A content (e.g., amount or weight ratio) of the dry cathode active material in the first dry cathode active material layer 110 may be greater than a content (e.g., amount or weight ratio) of the dry cathode active material in the second dry cathode active material layer 120. A content (e.g., amount or weight ratio) of the dry sulfide-based solid electrolyte in the first dry cathode active material layer 110 may be less than a content (e.g., amount or weight ratio) of the dry sulfide-based solid electrolyte in the second dry cathode active material layer 120.

In FIGs. 1A to 1E, in one or more embodiments, a content (e.g., amount or weight ratio) of the dry binder in the first dry cathode active material layer 110 may be, for example, equal to a content (e.g., amount or weight ratio) of the dry binder in the second dry cathode active material layer 120. The equal content (e.g., amount or weight ratio) may refer to the dry cathode film 100 that is intentionally prepared to have substantially the equal content (e.g., amount or weight ratio). The equal content (e.g., amount or weight ratio) refers to that, in the first dry cathode active material layer 110 and the second cathode active material layer 120, an unintended relative content (e.g., amount or weight ratio) difference between components, for example, the dry binders, may be, for example, 2 or less, 1 or less, 0.5 or less, or 0.1 % or less.

In some embodiments, the content (e.g., amount or weight ratio) of the dry binder in the first dry cathode active material layer 110 may be greater than the content (e.g., amount or weight ratio) of the dry binder in the second dry cathode active material layer 120. A ratio of the content (e.g., amount or weight ratio) of the dry binder in the first dry cathode active material layer 110 to the content (e.g., amount or weight ratio) of the dry binder in the second dry cathode active material layer 120 may be, for example, in a range of about 3:1 to about 1.1:1, about 2:1 to about 1.1:1, or about 1.5:1 to about 1.1:1. The first dry cathode active material layer 110 having a high dry cathode active material content (e.g., amount or weight ratio) may have an increased dry binder content (e.g., amount or weight ratio) as compared with the second dry cathode active material layer 120 having a low dry cathode active material content (e.g., amount or weight ratio), and thus a change in volume of the dry cathode active material in the first dry cathode active material layer 110 may be more effectively suppressed or reduced. In some embodiments, the cycle characteristics of an all-solid secondary battery including the dry cathode film 100 may be further improved.

Referring to FIG. 1A, in one or more embodiments, a first dry cathode active material layer thickness T110 may be, for example, equal to a second cathode active material layer thickness T120. The equal thickness may refer to the dry cathode film 100 that is intentionally prepared to have substantially the equal thickness. The equal thickness refers to that an unintended relative thickness difference between the thickness of the first dry cathode active material layer T110 and the thickness of the second cathode active material layer T120 may be, for example, 2 % or less, 1 % or less, 0.5 % or less, or 0.1 % or less.

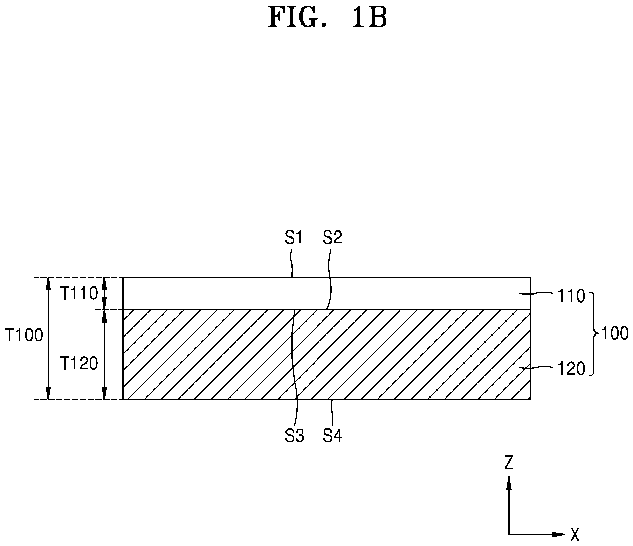

Referring to FIGs. 1B to 1C, the first dry cathode active material layer thickness T110 may be, for example, different from the second cathode active material layer thickness T120.

Referring to FIG. 1B, in one or more embodiments, the first dry cathode active material layer thickness T110 may be, for example, less than the second cathode active material layer thickness T120. A ratio of the first dry cathode active material layer thickness T110 to the second cathode active material layer thickness T120 may be, for example, in a range of about 1:9 to about 1:1.1, about 1:5 about to 1:1.1, about 1:3 to about 1:1.1, or about 1:2 to about 1:1.1. The ratio of the first dry cathode active material layer thickness T110 to the second cathode active material layer thickness T120 may be in such a range (e.g., the ranges described above), ion conduction between the dry cathode film 100 and the electrolyte layer may be more easily performed. In one or more embodiments, the cycle characteristics of an all-solid secondary battery including the dry cathode film 100 may be further improved. For example, the high-rate characteristics of an all-solid secondary battery may be further improved.

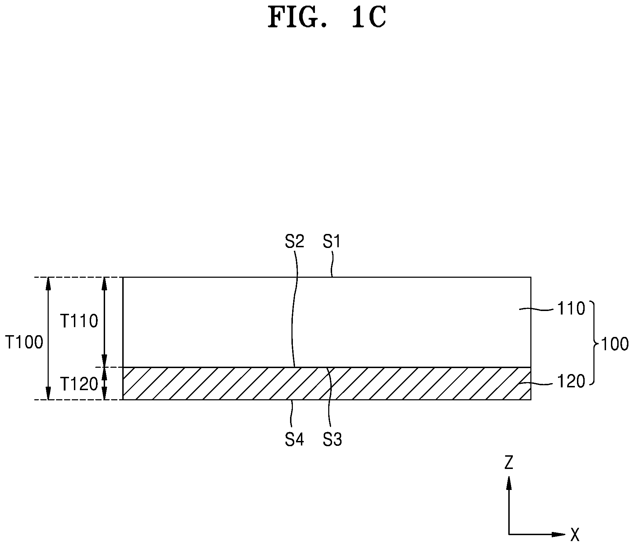

Referring to FIG. 1C, in some embodiments, the first dry cathode active material layer thickness T110 may be, for example, greater than the second cathode active material layer thickness T120. The ratio of the thickness T110 of the first dry cathode active material layer thickness T110 to the second cathode active material layer thickness T120 may be, for example, in a range of about 9:1 to about 1.1:1, about 5:1 to about 1.1:1, about 3:1 to about 1.1:1, or about 2:1 to about 1.1:1. The ratio of the first dry cathode active material layer thickness T110 to the second cathode active material layer thickness T120 may be in such a range (e.g., the ranges described above), the energy density of the dry cathode film 100 may be further improved. In some embodiments, the energy density of an all-solid secondary battery including the dry cathode film 100 may be further improved.

Referring to FIGs. 1A to 1C, in the dry cathode film 100, the ratio of the first dry cathode active material layer thickness T110 to the second cathode active material layer thickness T120 may be, for example, in a range of about 9:1 to about 1: 9, about 7:1 to about 1:7, about 5:1 to about 1:5, about 3:1 to about 1:3, or about 2:1 to about 1:2. In the dry cathode film 100, the ratio of the first dry cathode active material layer thickness T110 to the second cathode active material layer thickness T120 may be in such a range (e.g., the ranges described above), the energy density and cycle characteristics of an all-solid secondary battery may be easily adjusted. If (e.g., when) the first dry cathode active material layer thickness T110 excessively increases, the cycle characteristics of the all-solid secondary battery may relatively deteriorate, and if (e.g., when) the second cathode active material layer thickness T120 excessively increases, the energy density of the all-solid secondary battery may relatively decrease.

A dry cathode film thickness T100 may be the sum of the first dry cathode active material layer thickness T110 and the second cathode active material layer thickness T120.

Referring to FIGs. 1A to 1C, the first dry cathode active material layer 110 may have, for example, a first surface S1 adjacent to the cathode current collector and a second surface S2 opposite to the first surface S1. The content (e.g., amount or weight ratio) of the dry cathode active material in a first region adjacent to the first surface S1 may be greater than the content (e.g., amount or weight ratio) of the dry cathode active material in a second region adjacent to the second surface S2. A ratio of the content (e.g., amount or weight ratio) of the dry cathode active material in the first region adjacent to the first surface S1 to the content (e.g., amount or weight ratio) of the dry cathode active material in the second region adjacent to the second surface S2 may be, for example, in a range of about 3:1 to about 1.1:1, about 2:1 to about 1.1:1, or about 1.5:1 to about 1.1:1. The first dry cathode active material layer 110 may have such a content (e.g., amount or weight ratio) distribution of the dry cathode active material, and thus the cycle characteristics of an all-solid secondary battery including the dry cathode film 100 may be further improved.

Referring to FIGs. 1A to 1C, the second dry cathode active material layer 120 may have, for example, a third surface S3 adjacent to the first dry cathode active material layer 110 and a fourth surface S4 opposite to the third surface S3. The content (e.g., amount or weight ratio) of the dry cathode active material in a third region adjacent to the third surface S3 may be greater than the content (e.g., amount or weight ratio) of the dry cathode active material in a fourth region adjacent to the fourth surface S4. A ratio of the content (e.g., amount or weight ratio) of the dry cathode active material in the third region adjacent to the third surface S3 to the content (e.g., amount or weight ratio) of the dry cathode active material in the fourth region adjacent to the fourth surface S4 may be, for example, in a range of about 3:1 to about 1.1:1, about 2:1 to about 1.1:1, or about 1.5:1 to about 1.1:1. The second dry cathode active material layer 120 may have such a content (e.g., amount or weight ratio) distribution of the dry cathode active material, and thus the cycle characteristics of an all-solid secondary battery including the dry cathode film 100 may be further improved.

Referring to FIGs. 1A to 1C, the first dry cathode active material layer 110 may have, for example, the first surface S1 adjacent to the cathode current collector and the second surface S2 opposite to the first surface S1. The content (e.g., amount or weight ratio) of the dry sulfide-based solid electrolyte in the first region adjacent to the first surface S1 may be less than the content (e.g., amount or weight ratio) of the dry sulfide-based solid electrolyte in the second region adjacent to the second surface S2. A ratio of the content (e.g., amount or weight ratio) of the dry sulfide-based solid electrolyte in the first region adjacent to the first surface S1 to the content (e.g., amount or weight ratio) of the dry sulfide-based solid electrolyte in the second region adjacent to the second surface S2 may be, for example, about 0.3:1 to about 0.9:1, about 0.5:1 to about 0.9:1, or about 0.7:1 to about 0.9:1. The first dry cathode active material layer 110 may have such a concentration distribution of the dry sulfide-based solid electrolyte, and thus the cycle characteristics of an all-solid secondary battery including the dry cathode film 100 may be further improved.

Referring to FIGs. 1A to 1C, the second dry cathode active material layer 120 may have, for example, the third surface S3 adjacent to the first dry cathode active material layer 110 and the fourth surface S4 opposite to the third surface S3. The content (e.g., amount or weight ratio) of the dry sulfide-based solid electrolyte in the third region adjacent to the third first surface S3 may be less than the content (e.g., amount or weight ratio) of the dry sulfide-based solid electrolyte in the fourth region adjacent to the fourth surface S4. A ratio of the content (e.g., amount or weight ratio) of the dry sulfide-based solid electrolyte in the third region adjacent to the third surface S3 to the content (e.g., amount or weight ratio) of the dry sulfide-based solid electrolyte in the fourth region adjacent to the fourth surface S4 may be, for example, in a range of about 0.3:1 to about 0.9:1, about 0.5:1 to about 0.9:1, or about 0.7:1 to about 0.9:1. The second dry cathode active material layer 120 may have such a concentration distribution of the dry sulfide-based solid electrolyte, and thus the cycle characteristics of an all-solid secondary battery including the dry cathode film 100 may be further improved.

Referring to FIGs. 1A to 1C, the first dry cathode active material layer 110 may have, for example, the first surface S1 adjacent to the cathode current collector and the second surface S2 opposite to the first surface S1. The content (e.g., amount or weight ratio) of the dry binder in the first region adjacent to the first surface S1 may be less than the content (e.g., amount or weight ratio) of the dry binder in the second region adjacent to the second surface S2. A ratio of the content (e.g., amount or weight ratio) of the dry binder in the first region adjacent to the first surface S1 to the content (e.g., amount or weight ratio) of the dry binder in the second region adjacent to the second surface S2 may be, for example, in a range of about 0.3:1 to about 0.9:1, about 0.5:1 to about 0.9:1, or about 0.7:1 to about 0.9:1. The first dry cathode active material layer 110 may have such a content (e.g., amount or weight ratio) distribution of the dry binder, and thus the cycle characteristics of an all-solid secondary battery including the dry cathode film 100 may be further improved.

Referring to FIGs. 1A to 1C, the second dry cathode active material layer 120 may have, for example, the third surface S3 adjacent to the first dry cathode active material layer 110 and the fourth surface S4 opposite to the third surface S3. The content (e.g., amount or weight ratio) of the dry binder in the third region adjacent to the third surface S3 may be less than the content (e.g., amount or weight ratio) of the dry binder in the fourth region adjacent to the fourth surface S4. A ratio of the content (e.g., amount or weight ratio) of the dry binder in the third region adjacent to the third surface S3 to the content (e.g., amount or weight ratio) of the dry binder in the fourth region adjacent to the fourth surface S4 may be, for example, in a range of about 0.3:1 to about 0.9:1, about 0.5:1 to about 0.9:1, or about 0.7:1 to about 0.9:1. The second dry cathode active material layer 120 may have such a content (e.g., amount or weight ratio) distribution of the dry binder, and thus the cycle characteristics of an all-solid secondary battery including the dry cathode film 100 may be further improved.

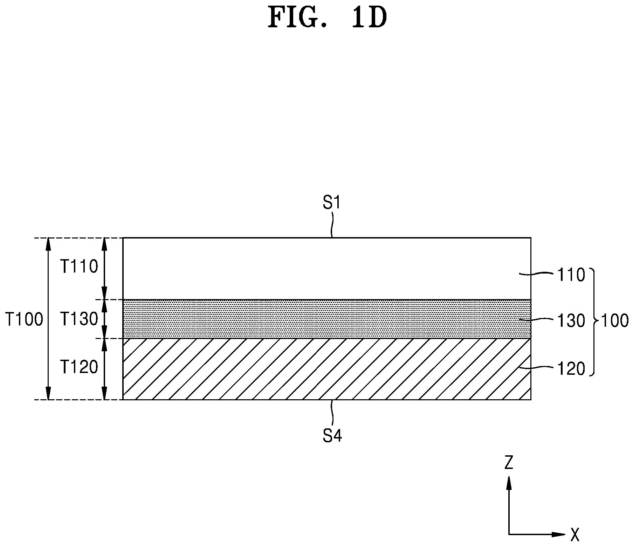

Referring to FIGs. 1D to 1E, in one or more embodiments, the dry cathode film 100 may include one or more third dry cathode active material layers 130 between the first dry cathode active material layer 110 and the second dry cathode active material layer 120. The content (e.g., amount or weight ratio) of the dry cathode active material in the third dry cathode active material layer 130 may be less than the content (e.g., amount or weight ratio) of the dry cathode active material in the first dry cathode active material layer 110 and greater than the content (e.g., amount or weight ratio) of the dry cathode active material in the second dry cathode active material layer 120. The content (e.g., amount or weight ratio) of the dry sulfide-based solid electrolyte in the third dry cathode active material layer 130 may be greater than the content (e.g., amount or weight ratio) of the dry sulfide-based solid electrolyte in the first dry cathode active material layer 110 and less than the content (e.g., amount or weight ratio) of the dry sulfide-based solid electrolyte in the second dry cathode active material layer 120. The content (e.g., amount or weight ratio) of the dry binder in the third dry cathode active material layer 130 may be less than or equal to the content (e.g., amount or weight ratio) of the dry binder in the first dry cathode active material layer 110 and greater than or equal to the content (e.g., amount or weight ratio) of the dry binder in the second dry cathode active material layer 120. The dry cathode film 100 may include the third dry cathode active material layer 130, and thus a rapid change in composition of the dry cathode active material at an interface between the first dry cathode active material layer 110 and the second dry cathode active material layer 120 may be alleviated. In some embodiments, local side reactions due to non-substantially uniform electrode reactions occurring at the interface between the first dry cathode active material layer 110 and the second dry cathode active material layer 120 may be more effectively suppressed or reduced.

Referring to FIG. 1D, in one or more embodiments, a third cathode active material layer thickness T130 may be less than, for example, the first dry cathode active material layer thickness T110 or the second cathode active material layer thickness T120. A ratio of the third cathode active material layer thickness T130 to the first dry cathode active material layer thickness T110 or the second cathode active material layer thickness T120 may be, for example, in a range of about 1:9 to about 1:1.1, about 1:5 to about 1:1.1, about 1:3 to about 1:1.1, or about 1:2 to 1:1.1. The ratio of the third cathode active material layer thickness T130 to the first dry cathode active material layer thickness T110 or the second cathode active material layer thickness T120 may be in such a range (e.g., the ranges described above), the uniformity of an electrode reaction may be improved in the entirety of the dry cathode film 100. In some embodiments, local side reactions may be further suppressed or reduced during charging/discharging of an all-solid secondary battery.

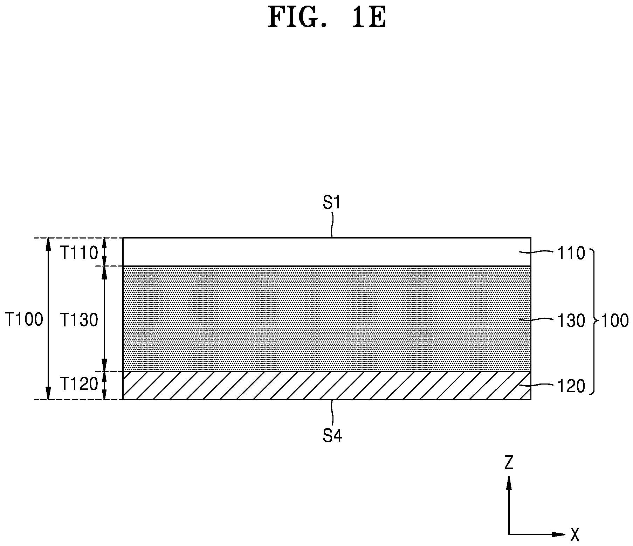

Referring to FIG. 1E, in one or more embodiments, the third cathode active material layer thickness T130 may be greater than, for example, the first dry cathode active material layer thickness T110 or the second cathode active material layer thickness T120. The ratio of the third cathode active material layer thickness T130 to the first dry cathode active material layer thickness T110 or the second cathode active material layer thickness T120 may be, for example, in a range of about 9:1 to about 1.1:1, about 5:1 to about 1.1:1, about 3:1 to about 1.1:1, or about 2:1 to about 1.1:1. The ratio of the third cathode active material layer thickness T130 to the first dry cathode active material layer thickness T110 or the second cathode active material layer thickness T120 may be in such a range (e.g., the ranges described above), a rapid change in composition between the dry cathode film 100 and the cathode current collector or between the dry cathode film 100 and the electrolyte layer may be alleviated, thereby improving the uniformity of an electrode reaction. In some embodiments, local side reactions may be further suppressed or reduced during charging/discharging of an all-solid secondary battery.

In one or more embodiments, the third cathode active material layer thickness T130 may be substantially equal to, for example, the first dry cathode active material layer thickness T110 and/or the second cathode active material layer thickness T120.

Referring to FIGs. 1D to 1E, the ratio of the third cathode active material layer thickness T130 to the first dry cathode active material layer thickness T110 or the second cathode active material layer thickness T120 may be, for example, in a range of about 9:1 to about 1:9, about 7:1 to about 1:7, about 5:1 to about 1:5, about 3:1 to about 1:3, or about 2:1 to 1:2. In the dry cathode film 100, the ratio of the third cathode active material layer thickness T130 to the first dry cathode active material layer thickness T110 or the second cathode active material layer thickness T120 may be in such a range (e.g., the ranges described above), the energy density and cycle characteristics of an all-solid secondary battery may be easily adjusted.

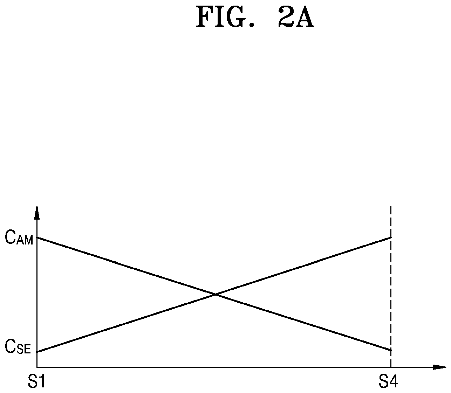

FIGs. 2A to 2C are each a graph showing concentration gradients of components according to a depth in a thickness direction of the dry cathode film 100 according to one or more embodiments of the present disclosure.

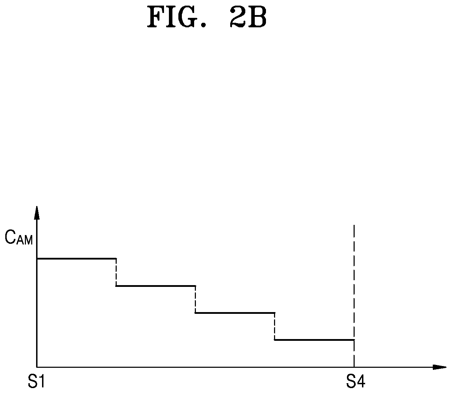

Referring to FIG. 2A and FIG. 2B, in one or more embodiments, the dry cathode film 100 may have, for example, a gradient of a dry cathode active material concentration C_{AM} in the thickness direction of the dry cathode film 100.

Referring to FIG. 2A, in some embodiments, in the dry cathode film 100, for example, the dry cathode active material concentration C_{AM} may continuously decrease in the thickness direction of the dry cathode film 100 from the first surface S1 adjacent to the cathode current collector. Referring to FIG. 2B, in some embodiments, in the dry cathode film 100, for example, the dry cathode active material concentration C_{AM} may discontinuously, for example, stepwise, decrease in the thickness direction of the dry cathode film 100 from the first surface S1 adjacent to the cathode current collector. The dry cathode film 100 may have such a gradient of the dry cathode active material concentration C_{AM}, the cycle characteristics of an all-solid secondary battery including the dry cathode film 100 may be further improved.

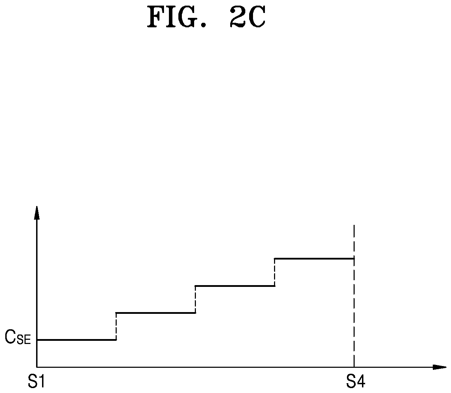

Referring to FIG. 2A and FIG. 2C, in one or more embodiments, the dry cathode film 100 may have, for example, a gradient of a dry sulfide-based solid electrolyte concentration C_{SE} in the thickness direction of the dry cathode film 100. Referring to FIG. 2A, in some embodiments, in the dry cathode film 100, for example, the dry sulfide-based solid electrolyte concentration C_{SE} may continuously increase in the thickness direction of the dry cathode film 100 from the first surface S1 adjacent to the cathode current collector. Referring to FIG. 2C, in some embodiments, in the dry cathode film 100, for example, the dry sulfide-based solid electrolyte concentration C_{SE} may discontinuously, for example, stepwise, increase in the thickness direction of the dry cathode film 100 from the first surface S1 adjacent to the cathode current collector. The dry cathode film 100 may have such a gradient of the dry sulfide-based solid electrolyte concentration C_{SE}, the cycle characteristics of an all-solid secondary battery including the dry cathode film 100 may be further improved.

In one or more embodiments, the dry cathode film 100 may have, for example, a gradient of a dry binder concentration in the thickness direction of the dry cathode film 100. In some embodiments, the dry binder concentration may continuously increase in the thickness direction of the dry cathode film 100 from the first surface S1 adjacent to the cathode current collector. In some embodiments, in the dry cathode film 100, the dry binder concentration may increase discontinuously, for example, stepwise, in the thickness direction of the dry cathode film 100 from the first surface S1 adjacent to the cathode current collector. The dry cathode film 100 may have such a gradient of the dry binder concentration, the cycle characteristics of an all-solid secondary battery including the dry cathode film 100 may be further improved.

### Dry cathode film: Composite of Li₂S, lithium salt, and carbon-based material

The dry cathode film 100 according to one or more embodiments may include the first dry cathode active material layer 110 and the second dry cathode active material layer 120. The first dry cathode active material layer 110 and the second dry cathode active material layer 120 may each independently include a dry cathode active material, a dry sulfide-based solid electrolyte, and a dry binder. The dry cathode active material may include a composite of Li₂S, a lithium salt, and a carbon-based material.

The composite of Li₂S, the lithium salt, and the carbon-based material may be represented by, for example, Li₂S-LiₐX_{b}-C, wherein 1≤a≤5 and 1≤b≤5. X may be iodine (I), bromine (Br), chlorine (Cl), fluorine (F), hydrogen (H), oxygen (O), selenium (Se), tellurium (Te), nitrogen (N), phosphorus (P), arsenic (As), antimony (Sb), aluminum (Al), boron (B), OCl, PF₆, BF₄, SbF₆, AsF₆, ClO₄, AlO₂, AlCl₄, NO₃, CO₃, BH₄, SO₄, BO₃, PO₄, NCl, NCl₂, BN₂, or any combination thereof. a may be, for example, 1, 2, 3, 4, or 5. b may be, for example, 1, 2, 3, 4, or 5. C may refer to a carbonaceous material substantially composed of carbon atoms.

In one or more embodiments, a size of a Li₂S crystallite obtained from an X-ray diffraction (XRD) spectrum of the composite of Li₂S, the lithium salt, and the carbon-based material may be, for example, 20 nm or less, 15 nm or less, or 10 nm or less. In some embodiments, the size of the Li₂S crystallite obtained from the XRD spectrum of the composite of Li₂S, the lithium salt, and the carbon-based material may be, for example, in a range of about 1 nm to about 20 nm, about 1 nm to about 15 nm, or about 3 nm to about 10 nm. The composite of Li₂S, the lithium salt, and the carbon-based material may include the Li₂S crystallite, and the size of the Li₂S crystallite may be (e.g., decrease to) 20 nm or less, and thus a change in volume of the Li₂S crystallite during charging/discharging may be alleviated. For example, as the size of the Li₂S crystallite decreases, a change in volume due to one (e.g., single) Li₂S crystallite may decrease, and thus the overall change in volume of the composite of Li₂S, the lithium salt, and the carbon-based material may be alleviated during charging/discharging. For example, as the size of the Li₂S crystallites decrease, a grain boundary between a plurality of Li₂S crystallites may more easily accommodate a change in volume of the Li₂S crystallite during charging/discharging, and thus a change in volume of the composite of Li₂S, the lithium salt, and the carbon-based material during charging/discharging may be alleviated. A possibility of the occurrence of defects such as cracks due to a change in volume of the composite during charging/discharging may be reduced. The dry cathode film 100 may include the composite of Li₂S, the lithium salt, and the carbon-based material, and thus the cycle characteristics of an all-solid secondary battery including the dry cathode film 100 may be improved. The size of the Li₂S crystallite may decrease to 20 nm, and thus contact areas between Li₂S, the lithium salt, and/or the carbon-based material may further increase. Because the contact areas between Li₂S, the lithium salt, and/or the carbon-based material may further increase, the reversibility of an electrode reaction in an all-solid secondary battery including the composite of Li₂S, the lithium salt, and the carbon-based material may be improved.

In one or more embodiments, the composite of Li₂S, the lithium salt, and the carbon-based material may include, for example, a solid solution of Li₂S and the lithium salt. The composite of Li₂S, the lithium salt, and the carbon-based material may include the solid solution of Li₂S and the lithium salt, the ionic conductivity of the composite of Li₂S, the lithium salt, and the carbon-based material may further increase. For example, the solid solution of Li₂S and the lithium salt may include lithium atoms disposed in the Li₂S crystallites, and thus the ionic conductivity of the solid solution of Li₂S and the lithium salt may be improved as compared with that of Li₂S. In one or more embodiments, the ionic conductivity of the composite of Li₂S, the lithium salt, and the carbon-based material may be improved, and the internal resistance of the composite of Li₂S, the lithium salt, and the carbon-based material may be reduced. The dry cathode film 100 may include such a composite, the internal resistance of the dry cathode film 100 may be further reduced. In one or more embodiments, the cycle characteristics of an all-solid secondary battery including the dry cathode film 100 may be further improved.

The composite of Li₂S, the lithium salt, and the carbon-based material may be distinguished from a simple mixture of Li₂S, an alkali metal salt, and a carbon-based material. The simple mixture of Li₂S, the alkali metal salt, and the carbon-based material may provide high interfacial resistance because a dense interface between Li₂S, the alkali metal salt, and the carbon-based material may not be maintained, and thus the lifespan characteristics of an all-solid secondary battery may deteriorate.

The composite of Li₂S, the lithium salt, and the carbon-based material may include Li₂S. The Li₂S may have a high theoretical capacity, and thus an all-solid secondary battery having a high energy density may be provided. However, in order to overcome the shortcomings such as the low ionic conductivity and/or electronic conductivity, Li₂S may form a composite with a lithium salt and a carbon-based material. A content (e.g., amount or weight ratio) of Li₂S in the composite of Li₂S, the lithium salt, and the carbon-based material may be, for example, in a range of about 50 wt% to about 80 wt%, about 50 wt% to about 75 wt%, or about 50 wt% to about 70 wt% of the total weight of the composite of Li₂S, the lithium salt, and the carbon-based material. If (e.g., when) the content (e.g., amount or weight ratio) of Li₂S excessively increases, it may not be easy to improve the ionic conductivity and/or electronic conductivity of Li₂S. If (e.g., when) the content (e.g., amount or weight ratio) of Li₂S is excessively low, the energy density of an all-solid secondary battery may decrease.

The composite of Li₂S, the lithium salt, and the carbon-based material may include the lithium salt. The lithium salt may be a compound that do not include, for example, sulfur (S). The lithium salt may be, for example, a binary compound or a ternary compound. For example, in some embodiments, the lithium salt may be a binary compound including lithium and one type or kind of element selected from Groups 13 to 17 of the periodic table of elements. For example, in some embodiments, the lithium salt may be a ternary compound including lithium and two types (kinds) of elements selected from Groups 13 to 17 of the periodic table of elements. The binary compound may include, for example, Lil, LiBr, LiCl, LiF, LiH, Li₂O, Li₂Se, Li₂Te, LisN, LisP, Li₃As, LisSb, Li₃Al₂, LiBs, or a combination thereof. In some embodiments, the composite may include the binary compound, and thus the ionic conductivity of the composite may be further improved. The dry cathode film 100 may include such a composite, for example, a dry cathode active material, and thus the internal resistance of the dry cathode film 100 may be further reduced. In one or more embodiments, the cycle characteristics of an all-solid secondary battery including the dry cathode film 100 may be further improved. The ternary compound may include, for example, Li₃OCl, LiPF₆, LiBF₄, LiSbF₆, LiAsF₆, LiClO₄, LiAlO₂, LiAlCl₄, LiNOs, Li₂CO₃, LiBH₄, Li₂SO₄, LisBOs, Li₃PO₄, Li₄NCl, Li₅NCl₂, Li₃BN₂, or a combination thereof. In some embodiments, the composite may include the ternary compound, and thus the ionic conductivity of the composite may be further improved. The dry cathode film 100 may include such a composite, for example, a dry cathode active material, and thus the internal resistance of the dry cathode film 100 may be further reduced. In one or more embodiments, the cycle characteristics of an all-solid secondary battery including the dry cathode film 100 may be further improved. A content (e.g., amount or weight ratio) of the lithium salt in the composite of Li₂S, the lithium salt, and the carbon-based material may be, for example, in a range of about 1 wt% to about 40 wt%, about 5 wt% to about 35 wt%, about 10 wt% to about 35 wt%, about 15 wt% to about 35 wt%, about 20 wt% to about 35 wt%, or about 25 wt% to about 35 wt% of the total weight of the composite of Li₂S, the lithium salt, and the carbon-based material. If (e.g., when) the content (e.g., amount or weight ratio) of the lithium salt excessively increases, the energy density of an all-solid secondary battery may decrease. If (e.g., when) the lithium salt is excessively low, the ionic conductivity of the composite of Li₂S, the lithium salt, and the carbon-based material may decrease so that the internal resistance of the dry cathode film 100 may increase. In some embodiments, the cycle characteristics of an all-solid secondary battery including the dry cathode film 100 may deteriorate.

In one or more embodiments, in the composite of Li₂S, the lithium salt, and the carbon-based material, a molar ratio of Li₂S to the lithium salt may be, for example, in a range of about 50:50 to about 95:5, about 60:40 to about 95:5, about 60:40 to about 90:10, about 65:35 to about 90:10, about 65:35 to about 85:15, or about 70:30 to about 85:15. In some embodiments, in the composite of Li₂S, the lithium salt, and the carbon-based material, the molar ratio of Li₂S to the lithium salt may be, for example, in a range of about 50:50 to about 95:5, about 50:50 to about 90:10, about 50:50 to about 85:15, about 50:50 to about 80:20, about 50:50 to about 75:25, or about 50:50 to about 70:30. The molar ratio of Li₂S to the lithium salt may be in such a range (e.g., the ranges described above), the cycle characteristics of an all-solid lithium battery including the dry cathode film 100 may be further improved. If (e.g., when) a molar ratio of Li₂S to the lithium salt is excessively high, an effect of improving ionic conductivity by the lithium salt may be insignificant. If (e.g., when) the molar ratio of Li₂S to the lithium salt is excessively low, the energy density of a lithium battery including a composite cathode active material may decrease.

The composite of Li₂S, the lithium salt, and the carbon-based material may include the carbon-based material. As the carbon-based material, for example, any material, which is a material including carbon atoms and is utilized as a conductive material in the art, may be utilized. The carbon-based material may be, for example, crystalline carbon, amorphous carbon, or a combination thereof. The carbon-based material may be, for example, a sintered material of a carbon precursor. In one or more embodiments, the carbon-based material may include, for example, carbon nanostructures. The carbon nanostructures may include, for example, one-dimensional carbon nanostructures, two-dimensional carbon nanostructures, three-dimensional carbon nanostructures, or a combination thereof. In one or more embodiments, the carbon nanostructures may include, for example, carbon nanotubes (CNTs), carbon nanofibers (CNFs), carbon nanobelts, carbon nanorods, graphene, or a combination thereof. In some embodiments, the carbon-based material may be, for example, a porous carbon-based material or a non-porous carbon-based material. The porous carbon-based materials may include, for example, periodic and regular two-dimensional or three-dimensional pores. The porous carbon-based material may include, for example, carbon black (CB) such as Ketjen black (KB), acetylene black (AB), Denka black, thermal black, or channel black; graphite; activated carbon; or a combination thereof. The form of the carbon-based material may be, for example, a particle form, a sheet form, a flake form, and/or the like, but embodiments of the present disclosure are not limited thereto. Any material utilized as carbon-based material in the art may be utilized. A content (e.g., amount or weight ratio) of the carbon-based material included in the composite of Li₂S, the lithium salt, and the carbon-based material may be, for example, in a range of about 1 wt% to about 20 wt%, about 5 wt% to about 20 wt%, or about 10 wt% to about 20 wt% of the total weight of the composite. If (e.g., when) the content (e.g., amount or weight ratio) of the carbon-based material excessively increases, the energy density of the dry cathode film 100 and an all-solid secondary battery may decrease. If (e.g., when) the content (e.g., amount or weight ratio) of the carbon-based material excessively decreases, the electronic (electron) conductivity of the composite of Li₂S, the lithium salt, and the carbon-based material may decrease, and thus the internal resistance of the dry cathode film 100 may increase. In some embodiments, the cycle characteristics of all-solid secondary battery may deteriorate.

A Mohs hardness of each of the lithium salt and the carbon-based material may be greater than that of Li₂S. In one or more embodiments, a Mohs hardness of Li₂S may be, for example, 0.6 or less. The Mohs hardness of the lithium salt may be 0.7 or more, 0.8 or more, 0.9 or more, 1.0 or more, 1.5 or more, or 2.0 or more. The lithium salt may have a Mohs hardness in such a range (e.g., the ranges described above), Li₂S may be more easily pulverized during a milling process, and a solid solution of Li₂S and the lithium salt may be more easily formed. A Mohs hardness of LiI may be, for example, about 2.0. The Mohs hardness of the carbon-based material may be 0.7 or more, 0.8 or more, 0.9 or more, 1.0 or more, 1.2 or more, or 1.5 or more. The carbon-based material may have a Mohs hardness in such a range (e.g., the ranges described above), Li₂S may be more easily pulverized during a milling process, and the composite of Li₂S, the lithium salt, and the carbon-based material may be more easily formed. A Mohs hardness of CNFs may be, for example, about 1.5.

In one or more embodiments, the carbon-based material may include, for example, a fibrous carbon-based material. The composite of Li₂S, the lithium salt, and the carbon-based material may include the fibrous carbon-based material, and thus the electronic conductivity of the composite of Li₂S, the lithium salt, and the carbon-based material may be further improved. The composite of Li₂S, the lithium salt, and the carbon-based material may include the fibrous carbon-based material, and thus electronic conduction may be more easily performed from the surface to the inside of the composite of Li₂S, the lithium salt, and the carbon-based material. The internal resistance of the dry cathode film 100 including the composite of Li₂S, the lithium salt, and the carbon-based material may be reduced, and the cycle characteristics of an all-solid secondary battery including the dry cathode film 100 may be further improved.

In one or more embodiments, an aspect ratio of the fibrous carbon-based material may be, for example, 2 or more, 3 or more, 4 or more, 5 or more, 10 or more, or 20 or more. In some embodiments, the aspect ratio of the fibrous carbon-based material may be, for example, in a range of about 2 to about 30, about 3 to about 30, about 4 to about 30, about 5 to about 30, about 10 to about 30, or about 20 to about 30. In some embodiments, the aspect ratio of the fibrous carbon-based material may be, for example, in a range of about 2 to about 30, about 2 to about 20, about 2 to about 10, about 2 to about 8, about 2 to about 5, or about 2 to about 4. The fibrous carbon-based material may have an aspect ratio in such a range (e.g., the ranges described above), the overall electronic conductivity of the composite of Li₂S, the lithium salt, and the carbon-based material may be improved, and an imbalance of local electronic conductivity in the composite of Li₂S, the lithium salt, and the carbon-based material may be further alleviated. The "aspect ratio" used herein may refer to the average aspect ratio and may be determined from SEM images or TEM images.

The fibrous carbon-based material may include, for example, carbon nanostructures. The carbon nanostructures may include, for example, CNFs, CNTs, carbon nanobelts, carbon nanorods, or a combination thereof.

In one or more embodiments, a particle diameter or size of the dry cathode active material, for example, a particle size of the composite of Li₂S, the lithium salt, and the carbon-based material, may be, for example, 10 µm or less, 8 µm or less, 5 µm or less, 4 µm or less, 2 µm or less, 1.5 µm or less, or 1 µm or less. In some embodiments, the particle size of the composite may be, for example, in a range of about 1 µm to about 10 µm, about 2 µm to about 10 µm, about 2 µm to about 8 µm, or about 3 µm to about 8 µm. In some embodiments, the particle size of the composite of Li₂S, the lithium salt, and the carbon-based material may be, for example, in a range of about 0.1 µm to about 10 µm, about 0.1 to about 8 µm, about 0.1 µm to about 5 µm, about 0.1 µm to about 4 µm, about 0.1 µm to about 2 µm, about 0.1 µm to about 1.5 µm, or about 0.1 µm to about 1 µm. The particle size of the composite of Li₂S, the lithium salt, and the carbon-based material may have a size in such a range (e.g., the ranges described above), a change in volume during charging or discharging may be suppressed or reduced, thereby suppressing the deterioration of the dry cathode active material during charging/discharging. If (e.g., when) the particle size of the composite of Li₂S, the lithium salt, and the carbon-based material excessively increases, a change in volume of the composite of Li₂S, the lithium salt, and the carbon-based material may increase during charging/discharging, which may accelerate the deterioration of the dry cathode active material. In some embodiments, the cycle characteristics of an all-solid secondary battery including such a dry cathode active material may deteriorate. For example, the cycle characteristics of an all-solid secondary battery including the dry cathode active material of the present disclosure, for example, the lifespan characteristics thereof, may be improved. The particle size of the composite of Li₂S, the lithium salt, and the carbon-based material may be measured by utilizing, for example, laser diffraction, scanning electron microscopy, and/or the like. The size of the composite of Li₂S, the lithium salt, and the carbon-based material may be an arithmetic average of particle diameters of a plurality of particles measured, for example, from a scanning electron microscope image by utilizing software.

In one or more embodiments, a particle diameter or size of Li₂S included in the composite, for example, a size of Li₂S particles included in the composite, may be, for example, 2 µm or less, 1.5 µm or less, or 1 µm or less. The size of the Li₂S particles may be, for example, in a range of about 0.1 µm to about 2 µm, about 0.1 µm to about 1.5 µm, or about 0.1 µm to about 1 µm. The Li₂S particles may have a size in such a range (e.g., the ranges described above), a change in volume during charging/discharging may be suppressed or reduced, thereby suppressing the deterioration of the dry cathode active material including the composite during charging/discharging. If (e.g., when) the size of the Li₂S particles excessively increases, a change in volume of the composite during charging/discharging may increase, which may accelerate the deterioration of the dry cathode active material including the composite. In some embodiments, the cycle characteristics of a secondary battery including the dry cathode active material may deteriorate.

For example, in one or more embodiments, with respect to about 100 parts by weight of the composite of Li₂S, the lithium salt, and the carbon-based material, Li₂S may be included in a range of about 10 parts by weight to about 80 parts by weight, the lithium salt may be included in a range of about 1 part by weight to about 40 parts by weight, and the carbon-based material may be included in a range of about 1 part by weight to about 20 parts by weight. In some embodiments, the content (e.g., amount or weight ratio) of Li₂S included in the composite of Li₂S, the lithium salt, and the carbon-based material may be, for example, in a range of about 10 parts by weight to about 80 parts by weight, about 20 parts by weight to about 70 parts by weight, about 30 parts by weight to about 60 parts by weight, or about 40 parts by weight to about 60 parts by weight with respect to about 100 parts by weight of the composite. The content (e.g., amount or weight ratio) of the lithium salt included in the composite of Li₂S, the lithium salt, and the carbon-based material may be, for example, in a range of about 10 parts by weight to about 40 parts by weight, about 15 parts by weight to about 40 parts by weight, about 20 parts by weight to about 40 parts by weight, or about 25 parts by weight to about 35 parts by weight with respect to about 100 parts by weight of the composite. The content (e.g., amount or weight ratio) of the carbon-based material included in the composite of Li₂S, the lithium salt, and the carbon-based material may be, for example, in a range of about 1 part by weight to about 20 parts by weight, about 5 parts by weight to about 20 parts by weight, or about 5 parts by weight to about 15 parts by weight with respect to about 100 parts by weight of the composite. In the composite of Li₂S, the lithium salt, and the carbon-based material, Li₂S, the lithium salt, and the carbon-based material may have a composition in such a range (e.g., the ranges described above), the dry cathode film 100 including the composite of Li₂S, the lithium salt, and the carbon-based material may provide excellent or suitable ionic conductivity and/or electronic conductivity.

In one or more embodiments, the composite of Li₂S, the lithium salt, and the carbon-based material may have an ionic (ion) conductivity of, for example, 1×10⁻⁵ S/cm or more, 2×10⁻⁵ S/cm or more, 4×10⁻⁵ S/cm or more, 6×10⁻⁵ S/cm or more, about 8×10⁻⁵S/cm or more, or 1×10⁻⁴ S/cm or more at a temperature of about 25 °C. Ionic conductivity may be measured by utilizing, for example, electrochemical impedance spectroscopy, a direct current (DC) polarization method, and/or the like. The composite of Li₂S, the lithium salt, and the carbon-based material may have ionic conductivity in such a range (e.g., the ranges described above), the internal resistance of the dry cathode film 100 including the composite of Li₂S, the lithium salt, and the carbon-based material may be further reduced. The cycle characteristics of an all-solid secondary battery including the cathode film 100 may be improved.

In one or more embodiments, the composite of Li₂S, the lithium salt, and the carbon-based material may have an electronic (electron) conductivity of, for example, 1×10⁻⁵ S/cm or more, 2×10⁻⁵ S/cm or more, 4×10⁻⁵ S/cm or more, 6×10⁻⁵ S/cm or more, about 8×10⁻⁵ S/cm or more, or 1×10⁻⁴ S/cm or more at a temperature of about 25 °C. Electronic conductivity may be measured by utilizing, for example, electrochemical impedance spectroscopy, a DC polarization method, and/or the like. The composite of Li₂S, the lithium salt, and the carbon-based material may have electronic conductivity in such a range (e.g., the ranges described above), the internal resistance of the dry cathode film 100 including the composite of Li₂S, the lithium salt, and the carbon-based material may be further reduced. The cycle characteristics of an all-solid secondary battery including the cathode film 100 may be improved.

In one or more embodiments, a content (e.g., amount or weight ratio) of the composite of the Li₂S, the lithium salt, and the carbon-based material may be, for example, in a range of about 50 wt% to about 95 wt%, about 50 wt% to about 80 wt%, about 55 wt% to about 80 wt%, about 60 wt% to about 80 wt%, about 65 wt% to about 80 wt%, or about 70 wt% to about 80 wt% of the total weight of the dry cathode film 100. If (e.g., when) the content (e.g., amount or weight ratio) of the composite of Li₂S, the lithium salt, and the carbon-based material excessively increases, a change in volume of a dry cathode may excessively increase during charging/discharging, which may deteriorate the cycle characteristics of an all-solid secondary battery. If (e.g., when) the content (e.g., amount or weight ratio) of the composite of Li₂S, the lithium salt, and the carbon-based material excessively decreases, the energy density of an all-solid secondary battery may decrease.

### Dry cathode film: Sulfide-based solid electrolyte

The dry cathode film 100 may include the dry sulfide-based solid electrolyte. The sulfide-based solid electrolyte may include, for example, at least one selected from among: Li₂S-P₂S₅; Li₂S-P₂S₅-LiX, wherein X is a halogen element; Li₂S-P₂S₅-Li₂O; Li₂S-P₂S₅-Li₂O-LiI; Li₂S-SiS₂; Li₂S-SiS₂-LiI; Li₂S-SiS₂-LiBr; Li₂S-SiS₂-LiCl; Li₂S-SiS₂-B₂S₃-LiI; Li₂S-SiS₂-P₂S₅-LiI; Li₂S-B₂S₃; Li₂S-P₂S₅-ZₘSₙ, wherein m and n are each a positive number and Z is one of Ge, Zn, and Ga; Li₂S-GeS₂; Li₂S-SiS₂-Li₃PO₄; Li₂S-SiS₂-LiₚMO_{q}, wherein p and q are each a positive number and M is one of P, Si, Ge, B, Al, Ga, and In; Li₇₋ₓPS₆₋ₓClₓ, wherein 0≤x≤2; Li₇₋ₓPS₆₋ₓBrₓ, wherein 0≤x≤2; and Li₇₋ₓPS₆₋ₓIₓ, wherein 0≤x≤2. For example, the dry sulfide-based solid electrolyte may be prepared by treating a starting material such as Li₂S or P₂S₅ through melt quenching or mechanical milling. In some embodiments, after such treating, heat treatment may be performed. The dry sulfide-based solid electrolyte may be in an amorphous state, a crystalline state, or a mixture state thereof. For example, in some embodiments, the dry sulfide-based solid electrolyte may include at least sulfur (S), phosphorus (P), and lithium (Li) as constituent elements, in some embodiments, the dry sulfide-based solid electrolyte may include, for example, Li₂S-P₂S₅. If (e.g., when) a material including Li₂S-P₂S₅ is utilized as the dry sulfide-based solid electrolyte, a mixing molar ratio of Li₂S to P₂S₅, for example, Li₂S:P₂S₅, may be in a range of about 20:80 to about 90:10, about 25:75 to about 90:10, about 30:70 to about 70:30, or about 40:60 to about 60:40.

The dry sulfide-based solid electrolyte may include (e.g., be), for example, an argyrodite-type or kind solid electrolyte represented by Formula 1:

Formula 1 Li⁺₁₂₋ₙ₋ₓAⁿ⁺X²⁻₆₋ₓY⁻ₓ

In Formula 1, A may be P, As, germanium (Ge), gallium (Ga), antimony (Sb), silicon (Si), tin (Sn), Al, indium (In), titanium (Ti), vanadium (V), niobium (Nb), or tantalum (Ta), X may be S, Se, or Te, Y may be Cl, Br, I, F, CN, OCN, SCN, or N₃, 1≤n≤5, and 0≤x≤2. In some embodiments, the dry sulfide-based solid electrolyte may be, for example, an argyrodite-type or kind compound including at least one selected from among Li₇₋ₓPS₆₋ₓClₓ, wherein 0≤x≤2, Li₇₋ₓPS₆₋ₓBrₓ, wherein 0≤x≤2, and Li₇₋ₓPS₆₋ₓIₓ, wherein 0≤x≤2. In some embodiments, the sulfide-based solid electrolyte may be, for example, an argyrodite-type or kind compound including at least one selected among from Li₆PS₅Cl, Li₆PS₅Br, and LisPSsl.

The argyrodite-type or kind solid electrolyte may have a density of about 1.5 g/cc to about 2.0 g/cc. The argyrodite-type or kind solid electrolyte may have a density of 1.5 g/cc or more, which may reduce the internal resistance of an all-solid secondary battery and may more effectively suppress or reduce lithium dendrites from penetrating a solid electrolyte separator.

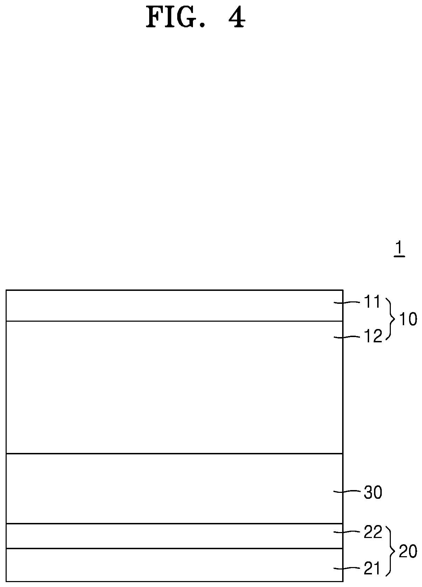

The dry sulfide-based solid electrolyte included in the dry cathode film 100 may be the same as or different from a sulfide-based solid electrolyte included in an electrolyte layer 30 (e.g., referring to FIG. 4).

A D50 average particle diameter of the dry sulfide-based solid electrolyte included in the dry cathode film 100 may be less than a D50 average particle diameter of the sulfide-based solid electrolyte included in the electrolyte layer 30. For example, in one or more embodiments, the D50 average particle diameter of the dry sulfide-based solid electrolyte included in the dry cathode film 100 may be 90 % or less, 80 % or less, 70 % or less, and 60 % or less, 50 % or less, 40 % or less, 30 % or less, or 20 % or less of the D50 average particle diameter of the sulfide-based solid electrolyte included in the electrolyte layer 30. The D50 average particle diameter may be, for example, a median particle diameter (D50). The median particle diameter (D50) may be a particle size corresponding to a 50 % cumulative volume when a particle size distribution measured through a laser diffraction method is calculated from particles having a smaller particle size to particles having a larger particle size.

In one or more embodiments, a content (e.g., amount or weight ratio) of the sulfide-based solid electrolyte included in the dry cathode film 100 may be in a range of about 5 wt% to about 45 wt%, about 15 wt% to about 40 wt%, about 20 wt% to about 40 wt%, or about 25 wt% to about 40 wt% of the total weight of the dry cathode film 100. The dry cathode film 100 may include the sulfide-based solid electrolyte in such a range and thus may provide reduced internal resistance and improved ionic conductivity. If (e.g., when) the content (e.g., amount or weight ratio) of the sulfide-based solid electrolyte excessively decreases, the internal resistance of the dry cathode film 100 may increase, which may deteriorate the cycle characteristics of an all-solid secondary battery. If (e.g., when) the content (e.g., amount or weight ratio) of sulfide-based solid electrolyte excessively increases, the energy density of an all-solid secondary battery may decrease.

### Dry cathode film: Dry binder

The dry cathode film 100 may include the dry binder. The dry binder may be, for example, a binder that is not impregnated, dissolved, or dispersed in a process solvent in a process of preparing the dry cathode film 100. The dry binder may be, for example, a binder that does not include a process solvent or is not in contact with a process solvent in a process of preparing the dry cathode film 100. The dry binder may be, for example, a fibrillized binder or a fibrous binder. The fibrillized binder or fibrous binder may serve as a porous matrix that supports and binds the dry cathode active material and other components included in the dry cathode film 100. The fibrillized binder or fibrous binder may be intermittently disposed on a surface of the dry cathode active material without aggregation to bind a plurality of dry cathode active materials, and thus an increase in internal resistance of the dry cathode film 100 due to the dry binder may be effectively suppressed or reduced. It may be confirmed that the fibrillized binder or fibrous binder has a fibrous form, for example, from a scanning electron microscope image of a dry cathode cross section. The fibrillized binder or fibrous binder may have an aspect ratio of, for example, 10 or more, 20 or more, 50 or more, or 100 or more.

In one or more embodiments, the dry binder may be fibrillized, for example, in a longitudinal direction (machine direction (MD)) of the dry cathode film 100. In some embodiments, the dry binder may be fibrillized, for example, in a longitudinal direction of the first dry cathode active material layer 110. In some embodiments, the dry binder may be fibrillized, for example, in a longitudinal direction of the second cathode active material layer 120. For example, in some embodiments, the dry binder may be fibrillized in substantially the same direction in the first dry cathode active material layer 110 and the second cathode active material layer 120. In some embodiments, The dry binder may be fibrillized in different directions in, for example, the first dry cathode active material layer 110 and the second cathode active material layer 120. The dry binder may be fibrillized in different directions, and thus the mechanical properties of the dry cathode film 100 may be further improving. For example, a tensile strength of the dry cathode film 100 in a transverse direction (TD) may be improved.

The dry binder may include, for example, polytetrafluoroethylene (PTFE), a polyvinylidene fluoride-hexafluoropropylene (PVDF-HFP) copolymer, polyvinylidene fluoride (PVDF), polyvinyl alcohol (PVA), polyacrylonitrile, carboxymethylcellulose (CMC), starch, hydroxypropylcellulose, cellulose, polyvinylpyrrolidone (PVP), polyethylene (PE), polypropylene (PP), ethylene-propylene-diene monomer (EPDM) rubber, a sulfonated-EPDM rubber, styrene butadiene rubber (SBR), fluoro rubber, or a copolymer thereof, but embodiments of the present disclosure are not necessarily limited thereto. Any binder utilized in preparing a dry electrode may be utilized. In some embodiments, the dry binder may include, for example, a fluorine-based binder. The fluorine-based binder may include, for example, PTFE, a PVDF-HFP copolymer, and/or PVDF.

In one or more embodiments, a glass transition temperature (Tg) of the dry binder may be, for example, in a range of about -30 °C to about 150 °C, about 15 °C to about 150 °C, about 15 °C to about 130 °C, about 50 °C to about 130 °C, about 100 °C to about 130 °C, or about 120 °C to about 130 °C. In some embodiments, the glass transition temperature Tg of the dry binder may be, for example, in a range of about - 30 °C to about 150 °C, about -30 °C to about 100 °C, about -30 °C to about 50 °C, about -30 °C to about 15 °C, about -30 °C to about -10 °C, or about 30 °C to about -20 ° C. In some embodiments, a glass transition temperature of PTFE may be, for example, in a range of about 120 °C to about 130 °C. The dry binder may have a glass transition temperature in such a range (e.g., the ranges described above), the fibrillized binder or fibrous binder may be more easily obtained in a process of preparing a dry electrode.

A content (e.g., amount or weight ratio) of the dry binder may be, for example, in a range of about 0.1 wt% to about 5 wt%, about 0.5 wt% to about 5 wt%, about 1 wt% to about 5 wt%, or about 1 wt% to about 3 wt% with respect to the total weight of the dry cathode film 100. The dry cathode film 100 may include the dry binder in such a range (e.g., the ranges described above) so that a binding force of the dry cathode film 100 may be improved, and the dry cathode film 100 may maintain an increased energy density.

### Dry cathode film: Conductive material

In one or more embodiments, the dry cathode film 100 may further include, for example, a conductive material. The conductive material may be, for example, a dry conductive material. The dry conductive material may be, for example, a conductive material that is not impregnated, dissolved, or dispersed in a process solvent in a process of preparing the dry cathode film 100. The dry conductive material may be, for example, a conductive material that does not include a process solvent or is not in contact with a process solvent in a process of preparing the dry cathode film 100. In some embodiments, the dry conductive material may include, for example, a carbon-based conductive material. The carbon-based conductive material may include, for example, a fibrous carbon-based material having an aspect ratio of 10 or more, a particulate carbon-based material having an aspect ratio of less than 10, or a combination thereof.

The fibrous carbon-based material having an aspect ratio of 10 or more may include, for example, a carbon fiber, CNTs, carbon nanobelts, and/or the like, but embodiments of the present disclosure are not limited thereto. Any material utilized as a carbon-based conductive material in the art may be utilized. In some embodiments, the fibrous carbon-based material having an aspect ratio of 10 or more may be selected from second carbon-based materials. A fibrous carbon-based conductive material may be distinguished from a carbon-based material constituting a portion of the dry cathode active material in that the fibrous carbon-based conductive material is simply mixed with the dry cathode active material.

The particulate carbon-based material having an aspect ratio of less than 10 may include, for example, CB, AB, KB, natural graphite, artificial graphite, and/or the like, but embodiments of the present disclosure are not limited thereto. Any material utilized as a carbon-based conductive material in the art may be utilized. In one or more embodiments, the aspect ratio of the particulate carbon-based material may be, for example, in a range of about 1 to about 7, about 1 to about 5, about 1 to about 3, or about 1 to about 2.

In one or more embodiments, a content (e.g., amount or weight ratio) of the dry conductive material included in the dry cathode film 100 may be, for example, in a range of about 0.1 wt% to about 5 wt%, about 0.5 wt% to about 5 wt%, or about 1 wt% to about 5 wt% with respect to the total weight of the dry cathode film 100. The dry cathode film 100 may further include the dry conductive material in such a range (e.g., the ranges described above) so that the electronic conductivity of the dry cathode film 100 may be further improved, and the cycle characteristics of an all-solid secondary battery including the dry cathode film 100 may be further improved. In some embodiments, the dry conductive material may not be provided.

### Dry cathode film: Other additives

In addition to the above-described dry cathode active material, dry solid electrolyte, dry binder, and conductive material, in some embodiments, the dry cathode film 100 may further include, for example, additives such as a filler, a coating agent, a dispersant, and an ion-conductive adjuvant.

As a filler, a coating agent, a dispersant, an ion-conductive adjuvant, and/or the like that may be included in the dry cathode film 100, suitable materials generally utilized in cathodes of all-solid secondary batteries may be utilized.

### Dry cathode film: Physical properties

In one or more embodiments, the dry cathode film 100 may be, for example, a self-standing film. The dry cathode film 100 may maintain the form of a film, for example, without a support. Therefore, the dry cathode film 100 may be prepared as a separate self-standing film and then disposed on the cathode current collector. The dry cathode film 100 may be prepared in a dry type or kind and thus may not include (e.g., may exclude) an intentionally added process solvent. For example, the dry cathode film 100 may not include (e.g., may exclude) a residual process solvent. An unintended trace amount of solvent may remain in the dry cathode film 100, but the solvent may not be an intentionally added process solvent. In one or more embodiments, the dry cathode film 100 may be distinguished from a wet cathode film prepared by mixing constituent components and a process solvent and then drying the resultant mixture to remove a portion or the entirety of the process solvent.

In one or more embodiments, a thickness of the dry cathode film 100 may be, for example, in a range of about 50 µm to about 500 µm, about 50 µm to about 400 µm, about 50 µm to about 300 µm, or about 50 µm to about 250 µm. If (e.g., when) the dry cathode film 100 is excessively thin, the number of current collectors may increase, and thus the energy density per unit volume of an all-solid secondary battery may decrease. If (e.g., when) the thickness of the dry cathode film 100 excessively increases, the internal resistance of a dry cathode may increase, which may deteriorate the cycle characteristics of an all-solid secondary battery.

In one or more embodiments, the dry cathode film 100 may have, for example, a tensile strength of 500 kPa or more, 700 kPa or more, or 900 kPa or more at a temperature of about 25 °C. in some embodiments, the dry cathode film 100 may have, for example, a tensile strength of about 500 kPa to about 5,000 kPa, about 700 kPa to about 5,000 kPa, about 700 kPa to about 3,000 kPa, about 700 kPa to about 2,000 kPa, or about 900 kPa to about 2,000 kPa at a temperature of about 25 °C. The dry cathode film 100 may have a tensile strength in such a range (e.g., the ranges described above), the structural stability of the dry cathode film 100 may be improved. In one or more embodiments, the dry cathode film 100 may maintain a stable three-dimensional conductive network during a charging/discharging process so that the reversibility of an electrode reaction may be improved. The dry cathode film 100 may have a high tensile strength in such a range (e.g., ranges described above), the mechanical strength of the dry cathode film 100 may be improved. The dry cathode film 100 may have the improved mechanical strength, which may suppress or reduce the local deterioration due to a change in volume of a dry cathode including the dry cathode film 100 and an all-solid secondary battery including the same during charging/discharging. In one or more embodiments, the cycle characteristics of an all-solid secondary battery may be improved. If (e.g., when) the tensile strength of the dry cathode film 100 is excessively low, defects such as cracks or disconnections may occur during a manufacturing process or a charging/discharging process of an all-solid secondary battery, thereby reducing the yield of the all-solid secondary battery. Tensile strength at break of the dry cathode film 100 may be measured, for example, according to ASTM D412.

In one or more embodiments, the dry cathode film 100 may have, for example, a surface resistivity of 70 Ω/sq or less, 60 Ω/sq or less, 50 Ω/sq or less, 40 Ω/sq or less, or 35 Ω/s or less at a temperature of about 25 °C and a pressure of about 1 atm. In some embodiments, the dry cathode film 100 may have, for example, a surface resistivity of about 0.1 Ω/sq to about 70 Ω/sq, about 0.5 Ω/sq to about 60 Ω/sq, about 1 Ω/sq to about 50 Ω/sq, about 1 Ω/sq to about 40 Ω/sq or about 1 Ω/sq to about 35 Ω/sq at a temperature of about 25 °C and a pressure of about 1 atm. The dry cathode film 100 may have a reduced surface resistivity in such a range (e.g., the ranges described above), the surface resistance, interface resistance, and/or internal resistance of the dry cathode film 100 may be reduced. In one or more embodiments, the cycle characteristics of an all-solid secondary battery including the dry cathode film 100 may be further improved. The surface resistivity of the dry cathode film 100 may be measured, for example, according to ASTM D257 or IEC 62631-3-1.

### Dry cathode

A dry cathode according to one or more embodiments may include a cathode current collector, and a cathode active material layer on at least one surface (e.g., one surface or two opposite surfaces) of the cathode current collector. The cathode active material layer may include the above-described dry cathode film. The dry cathode may include the above-described dry cathode film and thus may have a further reduced internal resistance. In one or more embodiments, the cycle characteristics of a secondary battery including the dry cathode may be further improved.

### Dry cathode: Cathode active material layer

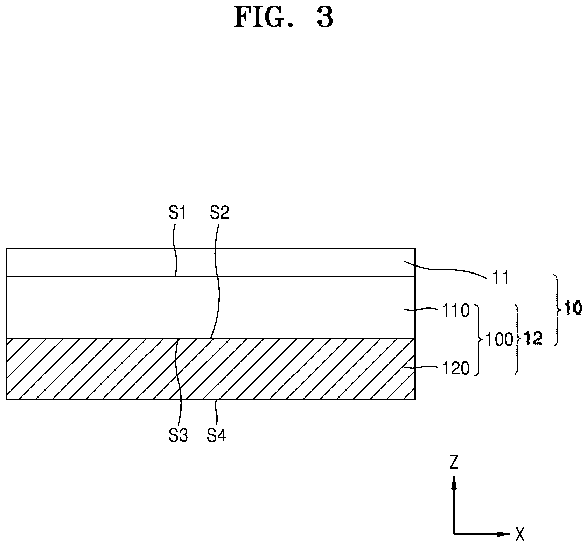

FIG. 3 is a schematic view of a dry cathode 10 according to one or more embodiments of the present disclosure.

Referring to FIG. 3, the dry cathode 10 may include a cathode current collector 11, and a cathode active material layer 12 disposed on one surface or two surfaces of the cathode current collector 11. The cathode active material layer 12 may include the above-described dry cathode film 100. The dry cathode film 100 may include a first dry cathode active material layer 110 adjacent to the cathode current collector 11 and a second dry cathode active material layer 120 disposed on the first dry cathode active material layer 110. The second dry cathode active material layer 120 may be disposed adjacent to an electrolyte layer.

Referring to FIGs. 4 to 10, in one or more embodiments, a dry cathode 10 may include a cathode current collector 11, and a cathode active material layer 12 on one surface or two surfaces of the cathode current collector 11. The cathode active material layer 12 may include the above-described dry cathode film 100.

### Dry cathode: Cathode current collector

The cathode current collector 11 may be provided as a plate, foil, and/or the like, made of, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. In some embodiments, the cathode current collector 11 may not be provided. A thickness of the cathode current collector 11 may be, for example, in a range of about 1 µm to about 100 µm, about 1 µm to about 50 µm, about 5 µm to about 25 µm, or about 10 µm to about 20 µm.

In one or more embodiments, the cathode current collector 11 may include, for example, a base film and a metal layer on (e.g., disposed on) one surface or two surfaces of the base film. The base film may include, for example, a polymer. The polymer may be, for example, a thermoplastic polymer. The polymer may include, for example, PET, PE, PP, polybutyleneterephthalate (PBT), polyimide (PI), or a combination thereof. In one or more embodiments, the base film may be, for example, an insulator. The base film may include an insulating thermoplastic polymer, and thus if (e.g., when) a short circuit occurs, the base film may soften or liquefy to interrupt the operation of a battery, thereby suppressing a rapid increase in current. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof. The metal layer may serve as an electrochemical fuse and may be cut if (e.g., when) an overcurrent occurs, thereby performing a short circuit prevention function. The thickness of the metal layer may be adjusted to adjust a limit current and a maximum current. The metal layer may be plated or deposited on the base film. If (e.g., when) the thickness of the metal layer decreases, a limit current and/or a maximum current of the cathode current collector 11 may decrease, and thus the stability of a lithium battery during a short circuit may be improved. In some embodiments, a lead tab may be added onto the metal layer for external connection. The lead tab may be welded to the metal layer or a metal layer/base film stack through ultrasonic welding, laser welding, spot welding, and/or the like. While the base film and/or the metal layer are melted during welding, the metal layer may be electrically connected to the lead tab. In order to more strongly and securely weld the metal layer and the lead tab, a metal chip may be added between the metal layer and the lead tab. The metal chip may be a flake made of the same material as a metal of the metal layer. The metal chip may be, for example, metal foil or a metal mesh. The metal chip may be, for example, aluminum foil, copper foil, or SUS (stainless steel) foil. If (e.g., when) the metal chip is disposed on the metal layer and then welded to the lead tab, the lead tab may be welded to the metal chip/metal layer stack or a metal chip/metal layer/base film stack. During welding, while the base film, the metal layer, and/or the metal chip are melted, the metal layer or a metal layer/metal chip stack may be electrically connected to the lead tab. In some embodiments, a metal chip and/or a lead tab may be added onto a portion of the metal layer. In one or more embodiments, the base film may have, for example, a thickness of about 1 µm to µm 50 µm, about 1.5 µm to about 50 µm, about 1.5 µm to about 40 µm, or about 1 µm to about 30 µm. The base film may have a thickness in such a range (e.g., the ranges described above), and thus a weight of an electrode assembly may be more effectively reduced. In one or more embodiments, a melting point of the base film may be, for example, in a range of about 100 °C to about 300 °C, about 100 °C to about 250 °C, or about 100 °C to about 200 °C. The base film may have a melting point in such a range (e.g., the ranges described above), the base film may be melted and easily coupled to the lead tab in a process of welding the lead tab. In order to improve adhesive strength between the base film and the metal layer, surface treatment such as corona treatment may be performed on the base film. In one or more embodiments, the metal layer may have, for example, a thickness of about 0.01 µm to about 3 µm, about 0.1 µm to about 3 µm, about 0.1 µm to about 2 µm, or about 0.1 µm to about 0.1 µm. The metal layer may have a thickness in such a range (e.g., the ranges described above), the stability of an electrode assembly may be secured while conductivity is maintained. In some embodiments, the metal chip may have, for example, a thickness of about 2 µm to about 10 µm, about 2 µm to about 7 µm, or about 4 µm to about 6 µm. The metal chip may have a thickness in such a range (e.g., the ranges described above), the metal layer and the lead tab may be more easily connected. The cathode current collector 11 may have such a structure, and thus the weight of a cathode may be reduced, thereby improving the energy density of the cathode and a lithium battery.

### Dry cathode: Interlayer

In one or more embodiments, the dry cathode 10 may include, for example, the cathode current collector 11 and may further include an interlayer between the cathode current collector 11 and the dry cathode film 100. In some embodiments, the interlayer may not be provided.

The interlayer may be disposed, for example, on one surface or two surfaces (e.g., two opposite surfaces) of the cathode current collector 11. The interlayer may be disposed on one surface or two surfaces of the cathode current collector 11, and thus a binding force between the cathode current collector 11 and the dry cathode film 100 may be further improved.

A thickness of the interlayer may be, for example, in a range of about 0.01 % to about 30 %, about 0.1 % to about 30 %, about 0.5 % to about 30 %, about 1 % to about 25 %, about 1 % to about 20 %, about 1 % to about 15 %, about 1 % to about 10 %, about 1 % to about 5 %, or about 1 % to about 3 % of the thickness of the cathode current collector 11. In some embodiments, the thickness of the interlayer may be, for example, in a range of about 10 nm to about 5 µm, about 50 nm to about 5 µm, about 200 nm to about 4 µm, about 500 nm to about 3 µm, about 500 nm to about 2 µm, about 500 nm to about 1.5 µm, or about 700 nm to about 1.3 µm. The interlayer may have a thickness in such a range so that a binding force between the cathode current collector 11 and the dry cathode film 100 may be further improved, and an increase in interfacial resistance may be suppressed or reduced.

In one or more embodiments, the interlayer may include, for example, a carbon-based conductive material. The carbon-based conductive material included in the interlayer layer may be selected from carbon-based conductive materials utilized in a dry electrode film (e.g., dry cathode film). The interlayer may include a carbon-based conductive material that is identical to the carbon-based conductive material utilized in the dry electrode film (e.g., dry cathode film). The interlayer may include the carbon-based conductive material and thus may be, for example, a conductive layer.

### Dry cathode: First inactive member

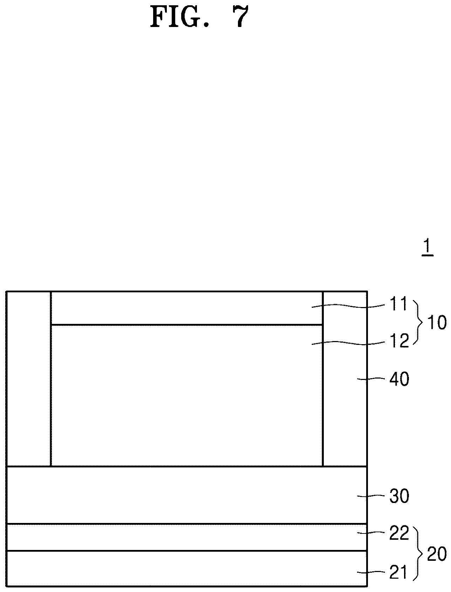

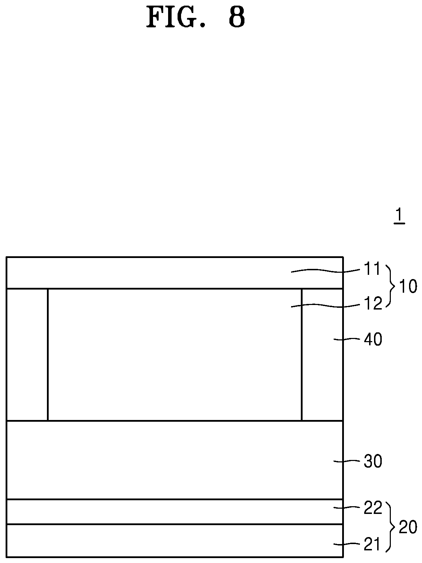

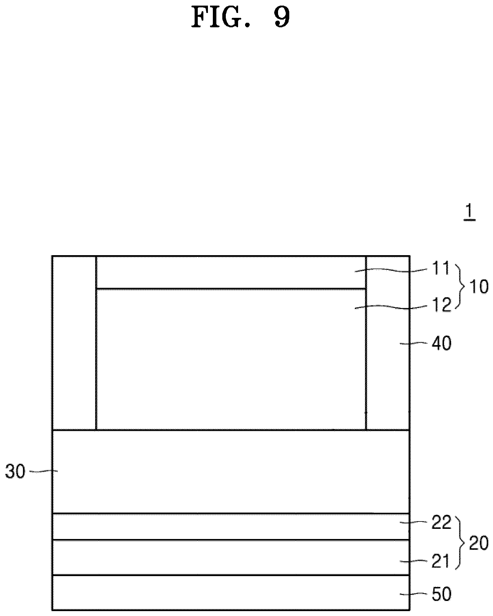

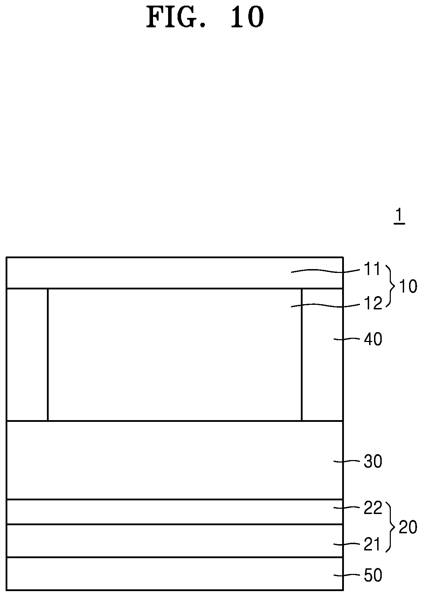

Referring to FIGs. 7 to 10, in one or more embodiments, the dry cathode 10 may include the cathode current collector 11 and the cathode active material layer 12 on one surface of the cathode current collector 11. A first inactive member 40 may be disposed on one side surface of the dry cathode 10. Referring to FIGs. 7 and 9, in some embodiments, the first inactive member 40 may be disposed on one side surface of each of the cathode active material layer 12 and the cathode current collector 11. Referring to FIGs. 8 and 10, in some embodiments, the first inactive member 40 may be disposed on one side surface of the cathode active material layer 12 and may be disposed between an electrolyte layer 30 and the cathode current collector 11 opposite to the electrolyte layer 30. In some embodiments, the first inactive member 40 may not be disposed on one side surface of the cathode current collector 11. The electrolyte layer 30 may be, for example, a solid electrolyte layer.

The inactive member 40 may be included to prevent or reduce cracks of the electrolyte layer 30 during manufacturing and/or charging/discharging of an all-solid secondary battery 1, thereby improving the cycle characteristics of the all-solid solid secondary battery 1. In the all-solid secondary battery 1 that does not include the first inactive member 40, ununiform pressure may be applied to the electrolyte layer 30 in contact with the dry cathode 10 during manufacturing and/or charging/discharging of the all-solid secondary battery 1 to cause cracks in the electrolyte layer 30, and a lithium metal may be grown through the cracks to increase a possibility of the occurrence of a short circuit.

In the all-solid secondary battery 1, a thickness of the first inactive member 40 may be greater than or equal to a thickness of the cathode active material layer 12. In some embodiments, in the all-solid secondary battery 1, the thickness of the first inactive member 40 may be substantially equal to the thickness of the dry cathode 10. The thickness of the first inactive member 40 may be equal to the thickness of the dry cathode 10, and thus substantially uniform pressure may be applied between the dry cathode 10 and the electrolyte layer 30, and the dry cathode 10 and the electrolyte layer 30 may be in sufficiently close contact with each other, thereby reducing interfacial resistance between the dry cathode 10 and the electrolyte layer 30. In some embodiments, the electrolyte layer 30 may be sufficiently sintered during a process of pressing and manufacturing the all-solid secondary battery 1, thereby reducing the internal resistance of the electrolyte layer 30 and the all-solid secondary battery 1 including the same.

In one or more embodiments, the first inactive member 40 may surround a side surface of the dry cathode 10 and may be in contact with the electrolyte layer 30. The first inactive member 40 may surround the side surface of the dry cathode 10 and may be in contact with the electrolyte layer 30, thereby effectively suppressing cracks of the electrolyte layer 30, which may be caused in a portion of the electrolyte layer 30, which is not in contact with the dry cathode 10, by a pressure difference during a pressing process. In some embodiments, the first inactive member 40 may surround the side surface of the dry cathode 10 and may be separated from an anode 20, for example, a first anode active material layer 22. The first inactive member 40 may surround the side surface of the dry cathode 10, may be in contact with the electrolyte layer 30, and may be separated from the anode 20. In some embodiments, a possibility of a short circuit occurring due to physical contact between the dry cathode 10 and the first anode active material layer 22 or a possibility of a short circuit occurring due to the overcharging of lithium may be suppressed or reduced. For example, the first inactive member 40 may be disposed on one side surface of the cathode active material layer 12 and concurrently (e.g., simultaneously) may be disposed on one side surface of the cathode current collector 11, thereby more effectively suppressing a possibility of a short circuit occurring due to contact between the cathode current collector 11 and the anode 20.

Referring to FIGs. 7 to 10, in some embodiments, the first inactive member 40 may extend from one side surface of the dry cathode 10 to an end portion of the electrolyte layer 30. The first inactive member 40 may extend to the end portion of the electrolyte layer 30 so that cracks occurring at the end portion of the electrolyte layer 30 may be suppressed or reduced. The end portion of the electrolyte layer 30 may be the outermost portion in contact with a side surface of the electrolyte layer 30. The first inactive member 40 may extend to the outermost portion in contact with the side surface of the electrolyte layer 30. In some embodiments, the first inactive member 40 may be separated from the anode 20, for example, the first anode active material layer 22. The first inactive member 40 may extend to the end portion of the electrolyte layer 30 but may not be in contact with the anode 20. For example, the inactive member 40 may fill a space extending from one side surface of the dry cathode 10 to the end portion of the electrolyte layer 30.

Referring FIGs. 7 to 10, in one or more embodiments, a width of the first inactive member 40 extending from one side surface of the dry cathode 10 to the end portion of the electrolyte layer 30 may be, for example, in a range of about 1 % to about 30 %, about 1 % to about 25 %, about 1 % to about 20 %, about 1 % to about 15 %, about 1 % to about 10 %, or about 1 % to about 5 % of a width between one side surface of the dry cathode 10 and the other side surface opposite to the one side surface. If (e.g., when) the width of the first inactive member 40 is excessively wide, the energy density of the all-solid secondary battery 1 may decrease. If (e.g., when) the width of the first inactive member 40 is excessively narrow, an effect of arranging the first inactive member 40 may be insignificant.

In one or more embodiments, an area of the dry cathode 10 may be smaller than an area of the electrolyte layer 30 in contact with the dry cathode 10. The first inactive member 40 may be disposed to surround the side surface of the dry cathode 10 to compensate for a difference in area between the dry cathode 10 and the electrolyte layer 30. The area of the first inactive member 40 may compensate for the difference between the area of the dry cathode 10 and the area of the electrolyte layer 30, thereby effectively preventing or reducing cracks of the electrolyte layer 30 caused by a pressure difference during a pressing process. For example, the sum of the area of the dry cathode 10 and the area of the first inactive member 40 may be substantially equal to the area of the electrolyte layer 30. The electrolyte layer 30 may be, for example, a solid electrolyte layer.

In one or more embodiments, the area of the dry cathode 10 may be, for example, less than 100 %, 99 % or less, 98 % or less, 97 % or less, 96 % or less, or 95 % or less of the area of the electrolyte layer 30. In some embodiments, the area of the dry cathode 10 may be, for example, in a range of about 50 % to less than 100 %, about 50 % to about 99 %, about 55 % to about 98 %, about 60 % to about 97 %, about 70 % to about 96 %, about 80 % to about 95 %, or about 85 % to about 95 %.of the area of the electrolyte layer 30.

If (e.g., when) the area of the dry cathode 10 is greater than or equal to the area of the electrolyte layer 30, a short circuit may occur due to physical contact between the dry cathode 10 and the first anode active material layer 22, or a possibility of a short circuit occurring due to the overcharging of lithium may increase. In some embodiments, the area of the dry cathode 10 may be, for example, equal to the area of the cathode active material layer 12. In some embodiments, the area of the dry cathode 10 may be, for example, equal to the area of the cathode current collector 11.

In one or more embodiments, the area of the first inactive member 40 may be, for example, 50 % or less, 40 % or less, 30 % or less, 20 % or less, or 10 % or less of the area of the dry cathode 10. In some embodiments, the area of the first inactive member 40 may be, for example, in a range of about 1 % to about 50 %, about 5 % to about 40 %, about 5 % to about 30 %, about 5 % to about 20 %, or about 5 % to about 15 % of the area of the dry cathode 10.

In one or more embodiments, the area of the dry cathode 10 may be smaller than the area of the anode current collector 21. The area of the dry cathode 10 may be, for example, less than 100 %, 99 % or less, 98 % or less, 97 % or less, 96 % or less, or 95 % or less of the area of the anode current collector 21. In some embodiments, the area of the dry cathode 10 may be, for example, in a range of about 50 % to less than 100 %, about 50 % to about 99 %, about 55 % to about 98 %, about 60 % to about 97 %, about 70 % to about 96 %, about 80 % to about 95 %, or about 85 % to about 95 % of the area of the anode current collector 21. In some embodiments, the area of the anode current collector 21 may be, for example, equal to the area of the anode 20. The area of the anode current collector 21 may be, for example, equal to the area of the first anode active material layer 22.

In the present disclosure, "equal" area, length, width, thickness, and/or shape may include all cases of having "substantially equal" area, length, width, thickness, and/or shape, excluding a case in which areas, lengths, widths, thicknesses, and/or shapes are intentionally different from each other. "Equal" area, length, width, and/or thickness includes a range in which the unintended difference in area, length, width, and/or thickness between compared objects is, for example, less than 3 %, less than 2 %, less than 1 %, less than 0.5 %, or less than 0.1 %.

In one or more embodiments, the thickness of the first inactive member 40 may be, for example, greater than the thickness of the first anode active material layer 22. The thickness of the first anode active material layer 22 may be, for example, 50 % or less, 40 % or less, 30 % or less, 20 % or less, or 10 % or less of the thickness of the first inactive member 40. In some embodiments, the thickness of the first anode active material layer 22 may be, for example, in a range of about 1 % to about 50 %, about 1 % to about 40 %, about 1 % to about 30 %, about 1 % to about 20 %, or about 1 % to about 10 % of the thickness of the first inactive member 40.

In one or more embodiments, the first inactive member 40 may be a gasket. By utilizing the gasket as the first inactive member 40, cracks of the electrolyte layer 30 caused by a pressure difference during a pressing process may be effectively suppressed or reduced.

In some embodiments, the first inactive member 40 may have, for example, a single-layer structure. In some embodiments, the first inactive member 40 may have a multi-layer structure. In the first inactive member 40 having the multi-layer structure, respective layers may have different compositions. The first inactive member 40 having the multi-layer structure may have, for example, a two-layer structure, a three-layer structure, a four-layer structure, or a five-layer structure. The first inactive member 40 having the multi-layer structure may include, for example, one or more adhesive layers and one or more support layers. For example, the adhesive layer may effectively prevent or reduce separation between the dry cathode 10 and the electrolyte layer 30 due to a change in volume of the dry cathode 10 that occurs during a charging/discharging process of the all-solid secondary battery 1 and may provide a binding force between the support layer and other layers to improve the film strength of the first inactive member 40. The support layer may provide a supporting force to the first inactive member 40, may prevent or reduce the nonuniformity of pressure applied to the electrolyte layer 30 during a pressing process or a charging/discharging process, and may prevent or reduce the shape deformation of the all-solid secondary battery 1 to be manufactured.

In one or more embodiments, the first inactive member 40 may be, for example, a flame-retardant inactive member. The flame-retardant inactive member may provide flame retardancy to prevent or reduce a possibility of thermal runaway and ignition of the all-solid secondary battery 1. In one or more embodiments, the safety of the all-solid secondary battery 1 may be further improved. The flame-retardant inactive member may be to absorb residual moisture in the all-solid secondary battery 1, thereby preventing or reducing the deterioration of the all-solid secondary battery 1 and improving the lifespan characteristics of the all-solid secondary battery 1.

The flame-retardant inactive member may include, for example, a matrix and a filler. The matrix may include, for example, a substrate and a reinforcing material. The matrix may include, for example, a fibrous substrate and a fibrous reinforcing material. The matrix may include the substrate to have elasticity. In some embodiments, the matrix may effectively accommodate a change in volume of the all-solid secondary battery 1 during charging/discharging and may be disposed at any one of one or more suitable positions. The substrate included in the matrix may include, for example, a first fibrous material. By including the first fibrous material, the substrate may effectively accommodate a change in volume of the dry cathode 10 which occurs during a charging/discharging process of the all-solid secondary battery 1 and may effectively suppress or reduce the deformation of the first inactive member 40 due to the change in volume of the dry cathode 10. In one or more embodiments, the first fibrous material may be, for example, a material having an aspect ratio of 5 or more, 20 or more, or 50 or more. In some embodiments, the first fibrous material may be, for example, a material having an aspect ratio of about 5 to about 1,000, about 20 to about 1,000, or about 50 to about 1,000. The first fibrous material may be, for example, an insulating material. The first fibrous material may be the insulating material, and thus a short circuit between the dry cathode 10 and the anode 20, which occur due to lithium dendrites and/or the like during charging/discharging of the all-solid secondary battery 1, may be effectively prevented or reduced. The first fibrous material may include, for example, at least one selected from among a pulp fiber, an insulating polymer fiber, and an ion conductive polymer fiber. The matrix may include the reinforcing material, and thus the strength thereof may be improved. In some embodiments, the matrix may prevent or reduce an excessive change in volume of the all-solid secondary battery 1 during changing/discharging and prevent or reduce the deformation of the all-solid secondary battery 1. In some embodiments, the reinforcing material included in the matrix may include, for example, a second fibrous material. The reinforcing material may include the second fibrous material, and thus the strength of the matrix may more uniformly increase. The second fibrous material may be, for example, a material having an aspect ratio of 3 or more, 5 or more, or 10 or more. In some embodiments, the second fibrous material may be, for example, a material having an aspect ratio of about 3 to about 100, about 5 to about 100, or about 10 to about 100. The second fibrous material may be, for example, a flame-retardant material. The second fibrous material may be the flame-retardant material, and thus ignition due to thermal runaway occurring during a charging/discharging process of the all-solid secondary battery 1 or an external impact may be effectively suppressed or reduced. In some embodiments, the second fibrous material may be, for example, a glass fiber, a metal oxide fiber, or a ceramic fiber.

In one or more embodiments, the flame-retardant inactive member may include a filler in addition to the matrix. The filler may be disposed in the matrix, on a surface of the matrix, or both (e.g., simultaneously) in the matrix and on the surface. The filler may include, for example, an inorganic material. The filler included in the flame-retardant inactive member may be, for example, a moisture getter. For example, the filler may adsorb moisture at a temperature of less than 100 °C to remove moisture remaining in the all-solid secondary battery 1, thereby preventing or reducing the deterioration of the all-solid secondary battery 1. In some embodiments, if (e.g., when) a temperature of the all-solid secondary battery 1 increases to 150 °C or more due to thermal runaway occurring during a charging/discharging process of the all-solid secondary battery 1 or an external impact, the filler may release the adsorbed moisture to effectively suppress or reduce ignition of the all-solid secondary battery 1. In some embodiments, the filler may be, for example, a flame retardant. The filler may be, for example, a metal hydroxide having moisture adsorption properties. The metal hydroxide included in the filler may be, for example, Mg(OH)₂, Fe(OH)₃, Sb(OH)₃, Sn(OH)₄, TI(OH)₃, Zr(OH)₄, Al(OH)₃, or a combination thereof. A content (e.g., amount or weight ratio) of the filler included in the flame-retardant inactive member may be, for example, in a range of about 10 parts by weight to about 80 parts by weight, about 20 parts by weight to about 80 parts by weight, about 30 parts by weight to about 80 parts by weight, about 40 parts by weight to about 80 parts by weight, about 50 parts by weight to about 80 parts by weight, about 60 parts by weight to about 80 parts by weight, or about 65 parts by weight to about 80 parts by weight with respect to about 100 parts by weight of the flame-retardant inactive member.

In one or more embodiments, the flame-retardant inactive member may further include, for example, a binder. The binder may include, for example, a curable polymer or a non-curable polymer. The curable polymer may be a polymer that is cured by heat and/or pressure. The curable polymer may be, for example, a solid at room temperature. In some embodiments, the flame-retardant inactive member may include, for example, a heat-press curable film and/or a cured product thereof. A heat-press curable polymer may be, for example, TSA-66 by Toray.

In one or more embodiments, the flame-retardant inactive member may additionally include other materials in addition to the above-described substrate, reinforcing material, filler, and binder. In some embodiments, the flame-retardant inactive member may further include, for example, at least one selected from among a paper, an insulating polymer, an ion-conductive polymer, an insulating inorganic material, an oxide-based solid electrolyte, and a sulfide-based solid electrolyte. The insulating polymer may be, for example, an olefin-based polymer such as PP or PE.

In one or more embodiments, a density of the substrate or the reinforcing material included in the flame-retardant inactive member may be, for example, in a range of about 10 % to about 300 %, about 10 % to about 150 %, about 10 % to about 140 %, about 10 % to about 130 %, or about 10 % to about 120 % of a density of the cathode active material included in the cathode active material layer 12.

The first inactive member 40 may be a member that does not include an electrochemically active material, for example, an electrode active material. The electrode active material may be a material that absorbs/desorbs lithium. The first inactive member 40 may be a member made of a material utilized in the art other than an electrode active material.

### All-solid secondary battery

An all-solid secondary battery according to one or more embodiments may include a cathode, an anode, and an electrolyte layer between the cathode and the anode. The cathode may be the above-described dry cathode. The anode may include an anode current collector and a first anode active material layer on one surface of the anode current collector.

Referring to FIGs. 4 to 10, in one or more embodiments, the all-solid secondary battery 1 may include the dry cathode 10, the anode 20, and the electrolyte layer 30 between the dry cathode 10 and the anode 20. The dry cathode 10 may include a dry cathode of one or more embodiments. The anode 20 may include the anode current collector 21 and the first anode active material layer 22 on one surface of the anode current collector 21.

### Cathode

A cathode may be defined as for the above-described dry cathode.

### Anode

### Anode: Anode active material

Referring to FIGs. 4 to 10, the anode 20 may include the first anode active material layer 22. The first anode active material layer 22 may include, for example, an anode active material and a binder.

The anode active material included in the first anode active material layer 22 may be, for example, an anode material that may form an alloy or compound with lithium.

In one or more embodiments, the anode active material included in the first anode active material layer 22 may have, for example, a particle form. An average particle diameter of the anode active material having a particle form may be, for example, 4 µm or less, 3 µm or less, 2 µm or less, 1 µm or less, 500 nm or less, 300 nm or less, or 100 nm or less. In some embodiments, the average particle diameter of the anode active material having a particle form may be, for example, in a range of about 10 nm to about 4 µm, about 10 nm to about 3 µm, about 10 nm to about 2 µm, about 10 nm to about 1 µm, about 10 nm to about 500 nm, about 10 nm to about 300 nm, or about 10 nm to about 100 nm. The anode active material may have an average particle size in such a range (e.g., the ranges described above), the reversible absorbing and/or desorbing of lithium may more easily be facilitated during charging/discharging. The average particle diameter of the anode active material may be, for example, a median diameter (D50) measured by utilizing a laser type or kind particle size distribution meter.

The anode active material included in the first anode active material layer 22 may include, for example, at least one selected from among a carbon-based anode active material and a metal or metalloid anode active material.

The carbon-based anode active material may include, for example, amorphous carbon, crystalline carbon, porous carbon, or a combination thereof.

In some embodiments, the carbon-based anode active material may be, for example, amorphous carbon. Examples of the amorphous carbon may include CB, AB, furnace black (FB), KB, graphene, and/or the like, but embodiments of the present disclosure are not necessarily limited thereto. Any material classified as amorphous carbon in the art may be utilized. The amorphous carbon may be carbon that has no crystallinity or very low crystallinity and may be distinguished from crystalline carbon or graphite-based carbon.

In some embodiments, the carbon-based anode active material may be, for example, porous carbon. A pore volume of the porous carbon may be, for example, in a range of about 0.1 cc/g to about 10.0 cc/g, about 0.5 cc/g to about 5 cc/g, or about 0.1 cc/g to about 1 cc/g. An average pore diameter of the porous carbon may be, for example, in a range of about 1 nm to about 50 nm, about 1 nm to about 30 nm, or about 1 nm to about 10 nm. A Brunauer-Emmett-Teller (BET) specific surface area of the porous carbon may be, for example, in a range of about 100 m²/g to about 3,000 m²/g.

The metal or metalloid anode active material may include at least one selected from among gold (Au), platinum (Pt), palladium (Pd), silicon (Si), silver (Ag), aluminum (Al), bismuth (Bi), tin (Sn), and zinc (Zn), but embodiments of the present disclosure are not necessarily limited thereto. Any material utilized as a metal anode active material or a metalloid anode active material which forms an alloy or compound with lithium in the art may be utilized. For example, nickel (Ni) does not form an alloy with lithium and thus is not a metal anode active material.

The first anode active material layer 22 may include one type or kind of anode active material among such anode active materials or a mixture of a plurality of different anode active materials. For example, in some embodiments, the first anode active material layer 22 may include only amorphous carbon or may include at least one selected from among gold (Au), platinum (Pt), palladium (Pd), silicon (Si), silver (Ag), aluminum (Al), bismuth (Bi), tin (Sn), and zinc (Zn). In some embodiments, the first anode active material layer 22 may include a mixture of amorphous carbon and at least one selected from among gold (Au), platinum (Pt), palladium (Pd), silicon (Si), silver (Ag), aluminum (Al), bismuth. (Bi), tin (Sn), and zinc (Zn). A mixing ratio of an amount amorphous carbon to an amount of gold and/or the like in the mixture may be, for example, in a range of about 99:1 to about 1:99, about 10:1 to about 1:2, about 5:1 to about 1:1, or about 4:1 to about 2:1 (based on weight), but embodiments of the present disclosure are not limited to such a range. The mixing ratio may be selected according to the required characteristics of the all-solid secondary battery 1. The anode active material may have such a composition, the cycle characteristics of the all-solid secondary battery 1 may be further improved.

In one or more embodiments, the anode active material included in the first anode active material layer 22 may include, for example, a mixture of first particles containing amorphous carbon and second particles containing a metal or metalloid. Examples of the metal or metalloid may include gold (Au), platinum (Pt), palladium (Pd), silicon (Si), silver (Ag), aluminum (Al), bismuth (Bi), tin (Sn), zinc (Zn), and/or the like. In some embodiments, the metalloid may be a semiconductor. A content (e.g., amount or weight ratio) of the second particles may be in a range of about 1 wt% to about 99 wt%, about 1 wt% to about 60 wt%, about 8 wt% to about 60 wt%, about 10 wt% to about 50 wt%, about 15 wt% to about 40 wt%, or about 20 wt% to about 30 wt% with respect to the total weight of the mixture. The second particles may have a content (e.g., amount or weight ratio) in such a range (e.g., the ranges described above), for example, the cycle characteristics of the all-solid secondary battery 1 may be further improved.

In some embodiments, the first anode active material layer 22 may include a composite anode active material. The composite anode active material may include, for example, a carbon-based support and a metal-based anode active material supported on the carbon-based support. The composite anode active material may have such a structure so that the localization of the metal-based anode active material in the first anode active material layer 22 may be prevented or reduced, and the substantially uniform distribution thereof may be obtained. In one or more embodiments, the cycle characteristics of the all-solid secondary battery 1 including the first anode active material layer 22 may be further improved.

The metal-based anode active material supported on the carbon-based support may include, for example, a metal, a metal oxide, a composite of a metal and a metal oxide, or a combination thereof. Non-limiting examples of the metal may include gold (Au), platinum (Pt), palladium (Pd), silicon (Si), silver (Ag), aluminum (Al), bismuth (Bi), tin (Sn), tellurium (Te), zinc (Zn), and/or the like. Non-limiting examples of the metal oxide may include gold (Au) oxide, platinum (Pt) oxide, palladium (Pd) oxide, silicon (Si) oxide, silver (Ag) oxide, aluminum (Al) oxide, bismuth (Bi) oxide, tin ( Sn) oxide, tellurium (Te) oxide, zinc (Zn) oxide, and/or the like. The metal oxide may include, for example, AuₓO_{y}, wherein 0<x≤2 and 0<y≤, PtₓO_{y}, wherein 0<x≤1 and 0<y≤2, PdₓO_{y}, wherein 0<x≤1 and 0<y≤1, SiₓO_{y}, wherein 0<x≤1 and 0<y≤2, AgₓO_{y}, wherein 0<x≤2 and 0<y≤1, AlₓO_{y}, wherein 0<x≤2 and 0<y≤3, BiₓO_{y}, wherein 0<x≤2 and 0<y≤3, SnₓO_{y}, wherein 0<x≤1 and 0<y≤2, TeₓO_{y}, wherein 0<x≤1 and 0<y≤3, ZnₓO_{y}, wherein 0<x≤1 and 0<y≤1, or a combination thereof. The composite of the metal and the metal oxide may include, for example, a composite of Au and AuₓO_{y}, wherein 0<x≤2 and 0<y≤3, a composite of Pt and PtₓO_{y}, wherein 0<x≤1 and 0<y≤2 a composite of Pd and PdₓO_{y}, wherein 0<x≤1 and 0<y≤1, a composite of Si and SiₓO_{y}, wherein 0<x≤1 and 0<y≤2, a composite of Ag and AgₓO_{y}, wherein 0<x≤2 and 0<y≤1, a composite of Al and AlₓO_{y}, wherein 0<x≤2 and 0<y≤3, a composite of Bi and BiₓO_{y}, wherein 0<x≤2 and 0<y≤3, a composite of Sn and SnₓO_{y}, wherein 0<x≤1 and 0<y≤2, a composite of Te and TeₓO_{y}, wherein 0<x≤1 and 0<y≤3, a composite of Zn and ZnₓO_{y}, wherein 0<x≤1 and 0<y≤1, or a combination thereof.

The carbon-based support may include, for example, amorphous carbon. Examples of the amorphous carbon may include CB, AB, FB, KB, graphene, activated carbon, CNFs, CNTs, and/or the like, but embodiments of the present disclosure are not necessarily limited thereto. Any material classified as amorphous carbon in the art may be utilized. The amorphous carbon may be carbon that has no crystallinity or very low crystallinity and may be distinguished from crystalline carbon or graphite-based carbon. A carbonaceous material may be, for example, a carbon-based anode active material.

The composite anode active material may have, for example, a particle form. A particle diameter of the composite anode active material having a particle form may be, for example, in a range of about 10 nm to about 4 µm, about 10 nm to about 1 µm, about 10 nm to about 500 nm, about 10 nm to about 200 nm, or about 10 nm to about 100 nm. The composite anode active material may have a particle diameter in such a range (e.g., the ranges described above), thus the reversible absorbing and/or desorbing of lithium may be more easily facilitated during charging/discharging. The metal-based anode active material supported on the carbon-based support may have, for example, a particle form. A particle diameter of the metal-based anode active material may be, for example, in a range of about 1 nm to about 200 nm, about 1 nm to about 150 nm, about 5 nm to about 100 nm, or about 10 nm to about 50 nm. The carbon-based support may have, for example, a particle form. A particle diameter of the carbon-based support may be, for example, in a range of about 10 nm to about 2 µm, about 10 nm to about 1 µm, about 10 nm to about 500 nm, about 10 nm to about 200 nm, or about 10 nm to about 100 nm. The carbon-based support may have a particle diameter in such a range (e.g., the ranges described above) and thus may be more uniformly disposed in the first anode active material layer. In some embodiments, the carbon-based support may include, for example, nanoparticles having a particle diameter of 500 nm or less. The particle diameter of the composite anode active material, the particle diameter of the metal-based anode active material, and the particle diameter of the carbon-based support may each be, for example, an average particle diameter. The average particle diameter may be, for example, a median diameter (D50) measured by utilizing laser type or kind particle size distribution meter. In some embodiments, the average particle size may be determined automatically by utilizing software, for example, from an electron microscope image or may be manually determined according to a manual computation.

### Anode: Binder

The binder included in the first anode active material layer 22 may be, for example, SBR, PTFE, PVDF, PP, a vinylidene fluoride/hexafluoropropylene copolymer, polyacrylonitrile, polymethyl methacrylate, and/or the like, but embodiments of the present disclosure are not necessarily limited thereto. Any material usable as a binder in the art may be utilized. The binder may be provided as a single binder or a plurality of different binders.

The first anode active material layer 22 may include the binder and thus may be stabilized on the anode current collector 21. In one or more embodiments, cracks of the first anode active material layer 22 may be suppressed or reduced despite changes in a volume and/or relative position of the first anode active material layer 22 during a charging/discharging process. For example, if (e.g., when) the first anode active material layer 22 does not include a binder, the first anode active material layer 22 may be easily separated from the anode current collector 21. At a portion of the anode current collector 21 exposed due to the separation of the first anode active material layer 22 from the anode current collector 21, the anode current collector 21 may be in contact with the electrolyte layer 30, which may cause an increase in a possibility of the occurrence of a short circuit. In some embodiments, the first anode active material layer 22 may be formed, for example, by applying a slurry, in which materials constituting the first anode active material layer 22 are dispersed, onto the anode current collector 21 and drying the slurry. The first anode active material layer 22 may include the binder, and thus an anode active material may be stably distributed in a slurry. For example, if (e.g., when) the slurry is applied onto the anode current collector 21 through screen printing, the clogging of a screen (for example, clogging by aggregates of an anode active material) may be suppressed or reduced.

### Anode: Other additives

In one or more embodiments, the first anode active material layer 22 may further include additives utilized in the all-solid secondary battery 1 according to a related art, such as a filler, a coating agent, a dispersant, and an conductive adjuvant.

### Anode: Solid electrolyte

In one or more embodiments, the first anode active material layer 22 may further include a solid electrolyte. The solid electrolyte may be, for example, a material selected from solid electrolytes included in the electrolyte layer 30. The solid electrolyte included in the first anode active material layer 22 may serve as a reaction point at which the formation of a lithium metal starts in the first anode active material layer 22, may serve as a space in which the formed lithium metal is stored, or may serve as a path for transferring lithium ions. In some embodiments, the solid electrolyte may not be provided.

In some embodiments, in the first anode active material layer 22, for example, a content (e.g., amount or weight ratio) of the solid electrolyte may be high in a region adjacent to the electrolyte layer 30 and may be low in a region adjacent to the anode current collector 21. The solid electrolyte in the first anode active material layer 22 may have, for example, a concentration gradient in which a concentration decreases from the region adjacent to the electrolyte layer 30 to the region adjacent to the anode current collector 21.

### Anode: First anode active material layer

In one or more embodiments, a ratio B/A of an initial charge capacity B of the first anode active material layer 22 to an initial charge capacity A of the cathode active material layer 12 may be in a range of about 0.005 to about 0.45. The initial charge capacity of the cathode active material layer 12 may be determined by charging from a 1^{st} open circuit voltage (OCV) to a maximum charging voltage vs. Li/Li⁺. The initial charge capacity of the first anode active material layer 22 may be determined by charging from a 2^{nd} OCV to about 0.01 V vs. Li/Li⁺ .

The maximum charging voltage may be determined by types (kinds) of cathode active materials. The maximum charging voltage may be, for example, about 1.5 V, about 2.0 V, about 2.5 V, about 3.0 V, about 3.5 V, about 4.0 V, about 4.2 V, or about 4.3 V. For example, in some embodiments, the maximum charging voltage for Li₂S or a Li₂S composite may be about 2.5 V vs. Li/Li⁺. For example, in some embodiments, the maximum charging voltage for Li₂S or the Li₂S composite may be about 3.0 V vs. Li/Li⁺. In one or more embodiments, the ratio B/A of the initial charge capacity B of the first anode active material layer 22 to the initial charge capacity A of the cathode active material layer 12 may be, for example, in a range of about 0.01 to about 0.3, about 0.01 to about 0.2, or about 0.05 to about 0.1. The initial charge capacity (mAh) of the cathode active material layer 12 may be obtained by multiplying a charge specific capacity (mAh/g) of the cathode active material by a mass (g) of the cathode active material in the cathode active material layer 12. If (e.g., when) one or more suitable types (kinds) of cathode active materials are utilized, a value of specific charge capacity×mass may be calculated for each cathode active material, and the sum of the values may be the initial charge capacity of the cathode active material layer 12. The initial charge capacity of the first anode active material layer 22 may be also calculated in substantially the same manner. The initial charge capacity of the first anode active material layer 22 may be obtained by multiplying a charge specific capacity (mAh/g) of the anode active material by a mass of the anode active material in the first anode active material layer 22. If (e.g., when) one or more suitable types (kinds) of anode active materials are utilized, a value of specific charge capacity×mass may be calculated for each anode active material, and the sum of the values may be the initial charge capacity of the first anode active material layer 22. The specific charge capacity of each of the cathode active material and the anode active material may be measured by utilizing a solid half-cell that uses a lithium metal as a counter electrode. The initial charge capacity of each of the cathode active material layer 12 and the first anode active material layer 22 may be directly measured by utilizing an all-solid half-cell at a constant current density, for example, about 0.1 mA/cm² The measurement may be performed on a cathode at an operating voltage from a 1^{st} OCV up to a maximum charging voltage of, for example, about 3.0 V (vs. Li/Li⁺). The measurement may be performed on an anode at an operating voltage from a 2^{nd} OCV up to about 0.01 V for the anode, for example, a lithium metal. For example, an all-solid half-cell including the cathode active material layer 12 may be charged at a constant current of about 0.1 mA/cm² from a 1^{st} OCV up to about 3.0 V, and an all-solid half-cell including the first anode active material layer 22 may be discharged at a constant current of about 0.1 mA/cm² from a 2^{nd} OCV to about 0.01 V. A current density during constant current charging may be, for example, about 0.2 mA/cm² or about 0.5 mA/cm². The all-solid half-cell including the cathode active material layer 12 may be charged, for example, from a 1^{st} OCV up to about 2.5 V, about 2.0 V, about 3.5 V, or about 4.0 V. A maximum charging voltage of a cathode active material layer may be determined by a maximum voltage of a battery that satisfies the safety conditions according to JIS C 8712:2015 of the Japanese Standards Association.

If (e.g., when) the initial charge capacity of the first anode active material layer 22 is excessively low, the first anode active material layer 22 may become very thin, and thus, during a repeated charging/discharging process, lithium dendrites formed between the first anode active material layer 22 and the anode current collector 21 may collapse the first anode active material layer 22, which may make it difficult to improve the cycle characteristics of the all-solid secondary battery 1. If (e.g., when) the charge capacity of the first anode active material layer 22 excessively increases, the energy density of the all-solid secondary battery 1 may decrease, and the internal resistance of the all-solid secondary battery 1 due to the first anode active material layer 22 may increase, which may make it difficult to improve the cycle characteristics of the all-solid secondary battery 1.

In one or more embodiments, a thickness of the first anode active material layer 22 may be, for example, 50 % or less, 40 % or less, 30 % or less, 20 % or less, 10 % or less, or 5 % or less of the thickness of the cathode active material layer 12. In some embodiments, the thickness of the first anode active material layer 22 may be, for example, in a range of about 1 % to about 50 %, about 1 % to about 40 %, about 1 % to about 30 %, about 1 % to about 20 %, about 1 % to about 10 %, or about 1 % to about 5 % of the thickness of the cathode active material layer 12. In some embodiments, the thickness of the first anode active material layer 22 may be, for example, in a range of about 1 µm to about 20 µm, about 2 µm to about 15 µm, or about 3 µm to about 10 µm. If (e.g., when) the first anode active material layer 22 is excessively thin, lithium dendrites formed between the first anode active material layer 22 and the anode current collector 21 may collapse the first anode active material layer 22, which may make it difficult to improve the cycle characteristics of the all-solid secondary battery 1. If (e.g., when) the thickness of the first anode active material layer 22 excessively increases, the energy density of the all-solid secondary battery 1 may decrease, and the internal resistance of the all-solid secondary battery 1 due to the first anode active material layer 22 may increase, which may make it difficult to improve the cycle characteristics of the all-solid secondary battery 1. If (e.g., when) the thickness of the first anode active material layer 22 decreases, for example, the initial charge capacity of the first anode active material layer 22 may also decrease.

### Anode: Second anode active material layer

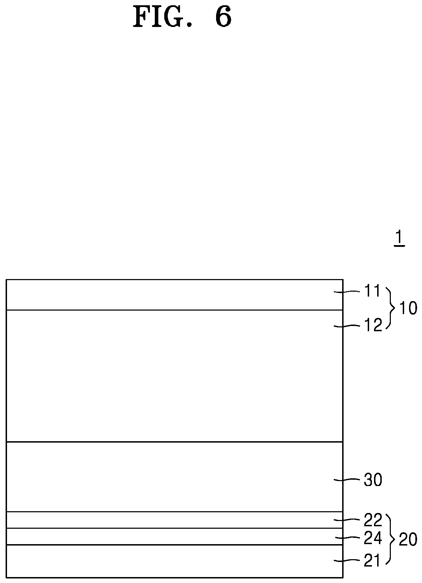

Referring to FIG. 6, in one or more embodiments, the all-solid secondary battery 1 may further include a second anode active material layer 24 which, after charging, is disposed between the anode current collector 21 and the first anode active material layer 22. The second anode active material layer 24 may be a metal layer including lithium or a lithium alloy. The metal layer may include the lithium or the lithium alloy. In some embodiments, the second anode active material layer 24 may be the metal layer including lithium and thus may serve, for example, as a lithium reservoir. Examples of the lithium alloy may include a Li-Al alloy, a Li-Sn alloy, a Li-In alloy, a Li-Ag alloy, a Li-Au alloy, a Li-Zn alloy, a Li-Ge alloy, a Li-Si alloy, and/or the like, but embodiments of the present disclosure are not limited to. Any material utilized as a lithium alloy in the art may be utilized. The second anode active material layer 24 may be made of one of such alloys or lithium or may be made of one or more suitable types (kinds) of alloys. In some embodiments, the second anode active material layer 24 may be, for example, a plated layer. For example, the second anode active material layer 24 may be plated between the first anode active material layer 22 and the anode current collector 21 during a charging process of the all-solid secondary battery 1.

A thickness of the second anode active material layer 24 is not limited, but may be, for example, in a range of about 1 µm to about 500 µm, about 1 µm to about 200 µm, about 1 µm to about 150 µm, about 1 µm to about 100 µm, or about 1 µm to about 50 µm. If (e.g., when) the second anode active material layer 24 is excessively thin, it is difficult for the second anode active material layer 24 to function as a lithium reservoir. If (e.g., when) the second anode active material layer 24 is excessively thick, the mass and volume of the all-solid secondary battery 1 may increase, and the cycle characteristics of the solid secondary battery 1 may actually deteriorate.

In some embodiments, in the all-solid secondary battery 1, for example, before assembly of the all-solid secondary battery 1, the second anode active material layer 24 may be disposed between the anode current collector 21 and the first anode active material layer 22. If (e.g., when) the second anode active material layer 24 is disposed between the anode current collector 21 and the first anode active material layer 22 before the assembly of the all-solid secondary battery 1, the second anode active material layer 24 may be a metal layer including lithium and thus may server as a lithium reservoir. For example, in some embodiments, before the assembly of the all-solid secondary battery 1, lithium foil may be disposed between the anode current collector 21 and the first anode active material layer 22.

If (e.g., when) the second anode active material layer 24 is plated by the all-solid secondary battery 1 being charged after being assembled, the solid secondary battery 1 may not include(e.g., may exclude) the second anode active material layer 24 when the solid secondary battery 1 is assembled, and thus the energy density of the all-solid secondary battery 1 may increase. During charging of the all-solid secondary battery 1, the first anode active material layer 22 may be charged beyond a charge capacity thereof. The first anode active material layer 22 may be overcharged. At the beginning of charging, lithium may be adsorbed in the first anode active material layer 22. The anode active material included in the first anode active material layer 22 may form an alloy or compound with lithium ions that move from the dry cathode 10. If (e.g., when) charging is performed beyond a capacity of the first anode active material layer 22, for example, lithium may be precipitated on a rear surface of the first anode active material layer 22, for example, between the anode current collector 21 and the first anode active material layer 22, and a metal layer corresponding to the second anode active material layer 24 may be formed by the precipitated lithium. The second anode active material layer 24 may be a metal layer mainly made of lithium (for example, metallic lithium). Such a result may be obtained, for example, because the anode active material included in the first anode active material layer 22 includes a material that forms an alloy or compound with lithium. During discharging, lithium in the first anode active material layer 22 and the second anode active material layer 24, for example, lithium in the metal layer, may be ionized to move toward the dry cathode 10. In some embodiments, in the all-solid secondary battery 1, lithium may be utilized as an anode active material. In some embodiments, the first anode active material layer 22 may cover the second anode active material layer 24, thereby serving as a protective layer for the second anode active material layer 24, for example, the metal layer, and concurrently (e.g., simultaneously) serving to suppress or reduce the precipitation growth of lithium dendrites. In some embodiments, a short circuit and a reduction in capacity of the all-solid secondary battery 1 may be suppressed or reduced, thereby improving the cycle characteristics of the all-solid secondary battery 1. In some embodiments, if (e.g., when) the second anode active material layer 24 is disposed by the all-solid secondary battery 1 being charged after being assembled, the anode 20, for example, the anode current collector 21, the first anode active material layer 22, and a region therebetween, may be Li-free regions that do not include lithium (Li) in an initial state of the all-solid secondary battery 1 or in a state after full discharging thereof.

### Anode: Anode current collector

The anode current collector 21 may be made of a material that does not (substantially) react (e.g., is suitably inert) with lithium, for example, a material that does not form both (e.g., simultaneously) an alloy and a compound with lithium. Examples of a material constituting the anode current collector 21 may include copper (Cu), stainless steel, titanium (Ti), iron (Fe), cobalt (Co), and/or nickel (Ni), but embodiments of the present disclosure are not necessarily limited thereto. Any material utilized as an electrode current collector in the art may be utilized. The anode current collector 21 may be made of one of the above-described metals or an alloy or a coating material of two or more metals. The anode current collector 21 may be, for example, in the form of a plate or foil.

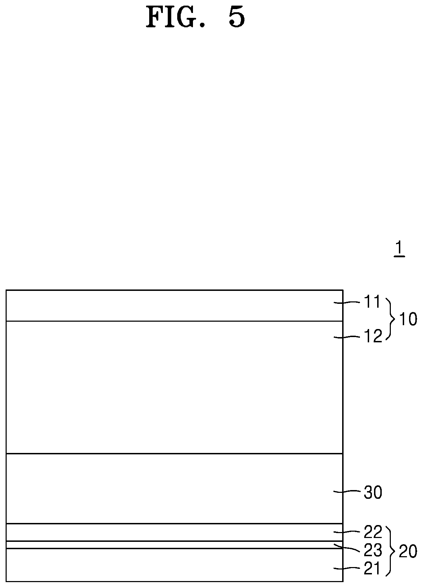

Referring to FIG. 5, in one or more embodiments, the all-solid secondary battery 1 may further include a thin film 23, which includes an element capable of forming an alloy with lithium, on one surface of the anode current collector 21. The thin film 23 may be disposed between the anode current collector 21 and the first anode active material layer 22. The thin film 23 may include, for example, an element capable of forming an alloy with lithium. Examples of the element capable of forming an alloy with lithium may include gold, silver, zinc, tin, indium, silicon, aluminum, bismuth, and/or the like, but embodiments of the present disclosure are not necessarily limited thereto. Any material capable of forming an alloy with lithium in the art may be utilized. The thin film 23 may be made of one of such metals or an alloy of one or more suitable types (kinds) of metals. The thin film 23 may be disposed on one surface of the anode current collector 21 so that, for example, a plated form of the second anode active material layer 24 plated between the thin film 23 and the first anode active material layer 22 may be further planarized, and the cycle characteristics of the all-solid secondary battery 1 may be further improved.

A thickness of the thin film 23 may be, for example, in a range of about 1 nm to about 800 nm, about 10 nm to about 700 nm, about 50 nm to about 600 nm, or about 100 nm to about 500 nm. If (e.g., when) the thickness of the thin film 23 is less than 1 nm, it may be difficult for the thin film 23 to function. If (e.g., when) the film 23 is excessively thick, the thin film 23 itself may adsorb lithium, and thus an amount of lithium precipitated at the anode 20 may decrease, resulting in a decrease in energy density of the all-solid secondary battery 1 and a decrease in cycle characteristics of the all-solid secondary battery 1. The thin film 23 may be disposed on the anode current collector 21 through, for example, vacuum deposition, sputtering, plating, and/or the like, but embodiments of the present disclosure are not necessarily limited to such a method. Any method capable of forming the thin film 23 in the art may be utilized.

In one or more embodiments, the anode current collector 21 may include, for example, a base film and a metal layer on one surface or two surfaces of the base film. The base film may include, for example, a polymer. The polymer may be, for example, a thermoplastic polymer. The polymer may include, for example, PET, PE, PP, PBT, PI, or a combination thereof. The polymer may be an insulating polymer. The base film may include an insulating thermoplastic polymer, and thus, if (e.g., when) a short circuit occurs, the base film may soften or liquefy to interrupt the operation of a battery, thereby suppressing a rapid increase in current. The metal layer may include, for example, copper (Cu), stainless steel, titanium (Ti), iron (Fe), cobalt (Co), nickel (Ni), or an alloy thereof. In some embodiments, the anode current collector 21 may additionally include a metal chip and/or a lead tab. The base film, metal layer, metal chip, and lead tab of the anode current collector 21 may be defined as for the above-described cathode current collector 11. The anode current collector 21 may have such a structure, the weight of an anode may be reduced, thereby improving the energy density of the anode and a lithium battery.

### Anode: Second inactive member

Referring to FIGs. 9 to 10, in one or more embodiments, the all-solid secondary battery 1 may further include a second inactive member 50 on the other surface of the anode current collector 21 (e.g., on the surface of the anode current collector 21 opposite the surface of the anode current collector 21 on which the anode active material layer 22 is disposed).

The second inactive member 50 may be different from the first inactive member 40 in that the second inactive member 50 may additionally include a conductive material to have conductivity. The second inactive member 50 may be, for example, a conductive flame-retardant inactive member.

Non-limiting examples of the conductive material may include graphite, CB, AB, KB, Denka black, a carbon fiber, CNTs, graphene, a metal fiber, a metal powder, and/or the like. The electronic conductivity of the second inactive member 50 may be, for example, 100 times or more, 1,000 times or more, or 10,000 times or more the electronic conductivity of the first inactive member 40 at a temperature of about 25 °C.

The second inactive member 50 may include, for example, a matrix, a filler, and a conductive material. The matrix may include, for example, a substrate and a reinforcing material. In some embodiments, the second inactive member 50 may further include a filler, a binder, and/or the like. A content (e.g., amount or weight ratio) of the conductive material included in the second inactive member 50 may be, for example, in a range of about 1 part by weight to about 30 parts by weight, about 1 part by weight to about 20 parts by weight, about 1 part by weight to about 15 parts by weight, about 1 part by weight to about 10 parts by weight, about 5 parts by weight to about 40 parts by weight, about 5 parts by weight to about 30 parts by weight, or about 5 parts by weight to about 35 parts by weight with respect to about 100 parts by weight of the second inactive member 50.

In one or more embodiments, a Young's modulus of the second inactive member 50 may be lower than, for example, a Young's modulus of the anode current collector 21. The Young's modulus of the second inactive member 50 may be, for example, 50 % or less, 30 % or less, 10 % or less, or 5 % or less of the Young's modulus of the anode current collector 21. In some embodiments, the Young's modulus of the second inactive member 50 may be, for example, in a range of about 0.01 % to about 50 %, about 0.1 % to about 30 %, about 0.1 % to about 10 %, or about 1 % to about 5 % of the Young's modulus of the anode current collector 21. In some embodiments, the Young's modulus of the second inactive member 50 may be, for example, 100 MPa or less, 50 MPa or less, 30 MPa or less, 10 MPa or less, or 5 MPa or less. In some embodiments, the Young's modulus of the second inactive member 50 may be, for example, in a range of about 0.01 MPa to about 100 MPa, about 0.1 MPa to about 50 MPa, about 0.1 MPa to about 30 MPa, about 0.1 MPa to about 10 MPa, or about 1 MPa to about 5 MPa.

The second inactive member 50 may have conductivity and thus may serve as the anode current collector 21. In some embodiments, the second inactive member 50 may have a lower Young's modulus than the anode current collector 21, and thus a change in volume the anode 20 may be more effectively accommodated during charging/discharging of the all-solid secondary battery 1. In some embodiments, the second inactive member 50 may effectively relieve internal stress caused by a change in volume of the all-solid secondary battery 1 during charging/discharging of the all-solid secondary battery 1, thereby improving the cycle characteristics of the all-solid secondary battery 1.

For example, in one or more embodiments, a thickness of the second inactive member 50 may be greater than the thickness of the first anode active material layer 22. The second inactive member 50 may be thicker than the first anode active material layer 22 and thus may more effectively accommodate a change in volume of the anode 20 during charging/discharging. In some embodiments, the thickness of the first anode active material layer 22 may be 50 % or less, 40 % or less, 30 % or less, 20 % or less, or 10 % or less of the thickness of the second inactive member 50. In some embodiments, the thickness of the first anode active material layer 22 may be, for example, in a range of about 1 % to about 50 %, about 1 % to about 40 %, about 1 % to about 30 %, about 1 % to about 20 %, or about 1 % to about 10 % of the thickness of the second inactive member 50. In some embodiments, the thickness of the second inactive member 50 may be, for example, in a range of about 1 µm to about 300 µm, about 10 µm to about 300 µm, about 50 µm to about 300 µm, or about 100 µm to about 200 µm. If (e.g., when) the second inactive member 50 is excessively thin, it may be difficult to provide the intended effect, and if (e.g., when) the second inactive member 50 is excessively thick, the energy density of the all-solid secondary battery 1 may decrease. A form of the second inactive member 50 is not limited and may be selected according to a form of the all-solid secondary battery 1. The second inactive member 50 may be, for example, in the form of a sheet, a rod, or a gasket. The second inactive member 50 may be disposed, for example, on one surface or two surfaces of one all-solid secondary battery 1. The second inactive member 50 may be disposed, for example, between a plurality of stacked all-solid secondary batteries 1. In one or more embodiments, the second inactive member 50 may be disposed, for example, between the plurality of stacked all-solid secondary batteries 1, on the uppermost surface thereof, and/or on the lowermost surface thereof.

### Electrolyte layer

### Electrolyte layer: Electrolyte

Referring to FIGs. 6 to 10, the electrolyte layer 30 may include an electrolyte between the dry cathode 10 and the anode 20. The electrolyte may include, for example, a solid electrolyte, a gel electrolyte, or a combination thereof.

The solid electrolyte may include, for example, a sulfide-based solid electrolyte, an oxide-based solid electrolyte, a polymer solid electrolyte, or a combination thereof.

In one or more embodiments, the solid electrolyte may be, for example, a sulfide-based solid electrolyte. The sulfide-based solid electrolyte may be defined as for the above-described dry cathode film.

The oxide-based solid electrolyte may include, for example, Li_{1+x+y}AlₓTi₂₋ₓSi_{y}P_{3-y}O₁₂, wherein 0<x<2 and 0≤y<3, BaTiO₃, Pb(Zr,Ti)O₃(PZT), Pb₁₋ₓLaₓZr1_{-y}Ti_{y}O₃ (PLZT), wherein 0≤x<1 and 0≤y<1, Pb(Mg₃Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃, wherein 0<x<2 and 0<y<3, LiₓAl_{y}Ti_{z}(PO₄)₃, wherein 0<x<2, 0<y<1, and 0<z<3, Li_{1+x+y}(Al, Ga)ₓ(Ti, Ge)₂₋ₓSi_{y}P_{3-y}O₁₂, wherein 0≤x≤1 and 0≤y≤1, Li_{xL}a_{y}TiO₃, wherein 0<x<2 and 0<y<3, Li₂O, LiOH, Li₂CO₃, LiAlO₂, Li₂O-Al₂O₃-SiO₂-P₂O₅-TiO₂-GeO₂, Li₃₊ₓLa₃M₂O₁₂, wherein M=Te, Nb, or Zr and 0≤x≤10, or a combination thereof. The oxide-based solid electrolyte may be prepared, for example, through sintering and/or the like.

In some embodiments, the oxide-based solid electrolyte may be, for example, a garnet-type or kind solid electrode selected from Li₇La₃Zr₂O₁₂ (LLZO) and Li₃₊ₓLa₃Zr₂₋ₐMₐO₁₂ (LLZO dopped with M), wherein M=Ga, W, Nb, Ta, or Al, 0<a<2, and 0≤x≤10.

For example, the polymer solid electrolyte may include a mixture of a lithium salt and a polymer or may include a polymer having an ion-conductive functional group. The polymer solid electrolyte may be, for example, a polymer electrolyte that is in a solid state at a temperature of about 25 °C at a pressure of about 1 atm. The polymer solid electrolyte may not include(e.g., may exclude), for example, a liquid. The polymer solid electrolyte may include a polymer, and the polymer may include, for example, polyethylene oxide (PEO), PVDF, PVDF-HFP, a poly(styrene-b-ethylene oxide) block copolymer (PS-PEO), poly(styrene-butadiene), poly(styrene-isoprene-styrene), a poly(styrene-b-divinylbenzene) block copolymer, a poly(styrene-ethylene oxide-styrene) block copolymer, polystyrene sulfonate (PSS), polyvinyl fluoride (PVF), poly(methylmethacrylate) (PMMA), polyethylene glycol (PEG), polyacrylonitrile (PAN), polytetrafluoroethylene (PTFE), polyethylenedioxythiophene (PEDOT), polypyrrole (PPY), polyacrylonitrile (PAN), polyaniline, poly acetylene, NAFION^{™} AQUIVION^{®}, FLEMION^{®}, GORE^{™}, ACIPLEX^{™}, MORGANE^{®}-ADP, sulfonated poly(ether ketone) (SPEEK), sulfonated poly(arylene ether ketone ketone sulfone) (SPAEKKS), sulfonated poly(aryl ether ketone (SPAEK), poly[bis(benzimidazobenzisoquinolinones)] (SPBIBI), poly(styrene sulfonate) (PSS), lithium 9,10-diphenylanthracene-2-sulfonate (DPASLi⁺), or a combination thereof, but embodiments of the present disclosure are not limited thereto. Any material utilized in a polymer electrolyte in the art may be utilized. As the lithium salt, any material may be utilized as long as the material is usable as a lithium salt in the art. The lithium salt may include, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂), wherein x and y are each a natural number from 1 to 20, LiCl, Lil, or a mixture thereof. A polymer included in the polymer solid electrolyte may be, for example, a compound including 10 or more, 20 or more, 50 or more, or 100 or more repeating units. A weight average molecular weight of the polymer included in the polymer solid electrolyte may be, for example, 1,000 Dalton or more, 10,000 Dalton or more, 100,000 Dalton or more, or 1,000,000 Dalton or more.

The gel electrolyte may be, for example, a polymer gel electrolyte. The gel electrolyte may have a gel state without including, for example, a polymer.

In some embodiments, the polymer gel electrolyte may include, for example, a liquid electrolyte and a polymer or may include an organic solvent and a polymer having an ion-conductive functional group. In some embodiments, the polymer gel electrolyte may be, for example, a polymer electrolyte that is in a gel state at a temperature of about 25 °C at a pressure of about 1 atm. In some embodiments, the polymer gel electrolyte may have, for example, a gel state without including a liquid. In some embodiments, the liquid electrolyte utilized in the polymer gel electrolyte may include, for example, a mixture of an ionic liquid, a lithium salt, and an organic solvent, a mixture of a lithium salt and an organic solvent, a mixture of an ionic liquid and an organic solvent, or a mixture of a lithium salt and an ionic liquid. The polymer utilized in the polymer gel electrolyte may be selected from polymers utilized in a solid polymer electrolyte. The organic solvent may be selected from organic solvents utilized in a liquid electrolyte. The lithium salt may be selected from lithium salts utilized in a polymer solid electrolyte. The ionic liquid may refer to a salt in a liquid state at room temperature or a room-temperature molten salt that has a melting point at room temperature or less and includes (e.g., consists of) only ions. The ionic liquid may include, for example, a compound including a) at least one cation selected from among an ammonium-based cation, a pyrrolidinium-based cation, pyridinium-based cation, a pyrimidinium-based cation, an imidazolium-based cation, a piperidinium-based cation, a pyrazolium-based cation, an oxazolium-based cation, a pyridazinium-based cation, a phosphonium-based cation, a sulfonium-based cation, a triazolium-based cation, and a mixture thereof, and b) at least one anion selected from among BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br⁻, I⁻, SO₄²⁻, CF₃SO₃⁻, (FSO₂)₂N⁻, (C₂F₅SO₂)₂N⁻, (C₂F₅SO₂)(CF₃SO₂)N⁻, and (CF₃SO₂)₂N⁻. The polymer solid electrolyte may be impregnated, for example, in a liquid electrolyte in a secondary battery to form a polymer gel electrolyte. In some embodiments, the polymer gel electrolyte may further include inorganic particles. The polymer included in the polymer gel electrolyte may be, for example, a compound including 10 or more, 20 or more, 50 or more, or 100 or more repeating units. A weight average molecular weight of the polymer included in the polymer gel electrolyte may be, for example, 500 Dalton or more, 1,000 Dalton or more, 10,000 Dalton or more, 100,000 Dalton or more, or 1,000,000 Dalton or more.

### Electrolyte layer: Binder

In one or more embodiments, the electrolyte layer 30 may include, for example, a binder. The binder included in the electrolyte layer 30 may include, for example, SBR, PTFE, PVDF, PE, and/or the like, but embodiments of the present disclosure are not limited thereto. Any material utilized as a binder in the art may be utilized. The binder of the electrolyte layer 30 may be the same as or different from the binder included in the cathode active material layer 12 and the anode active material layer 22. In some embodiments, the binder may not be provided.

A content (e.g., amount or weight ratio) of the binder included in the electrolyte layer 30 may be in a range of about 0.1 wt% to about 10 wt%, about 0.1 wt% to about 5 wt%, about 0.1 wt% to about 3 wt%, about 0.1 wt% to about 1 wt%, about 0 wt% to about 0.5 wt%, or about 0 wt% to about 0.1 wt% with respect to the total weight of the electrolyte layer 30.

The present disclosure will be described in more detail through the following Examples and Comparative Examples. However, Examples are for illustrative purposes only, and the scope of the present disclosure is not limited by Examples.

### Preparation of cathode active material

### Preparation Example 1: Li₂S-LiI-CNF composite

### First stage

Li₂S and LiI were mixed at a weight ratio of 30:20. The obtained mixture was mechanically milled by utilizing a ball mill to prepare a Li₂S-LiI composite. Milling conditions included a temperature of 25 °C, a speed of 600 rpm, and 10 hours. Milling energy applied to a sample during milling was 28 G.

### Second stage

The Li₂S-LiI composite and CNFs were mixed at a weight ratio of 50:10. The obtained mixture was mechanically milled by utilizing a ball mill to prepare a Li₂S-LiI-CNF composite. Milling conditions included a temperature of 25 °C, a speed of 600 rpm, and 10 hours. Milling energy applied to a sample during milling was 28 G. The Li₂S-LiI-CNF composite was utilized as a cathode active material.

A Mohs hardness of Li₂S was 0.6, a Mohs hardness of LiI was 2.0, and a Mohs hardness of the CNFs was 1.5.

### Comparative Preparation Example 1: S-CNT-Li₆PS₅Cl composite

### First stage

Sulfur (S) and CNTs were mixed at a weight ratio of 25:25. The obtained mixture was mechanically milled by utilizing a ball mill to prepare an S-CNT composite. Milling conditions included a temperature of 25 °C, a speed of 600 rpm, and 10 hours.

### Second stage

The S-CNT composite and Li₆PS₅Cl were mixed at a weight ratio of 50:50. The obtained mixture was mechanically milled by utilizing a ball mill to prepare an S-CNT-Li₆PS₅Cl composite. Milling conditions included a temperature of 25 °C, a speed of 600 rpm, and 10 hours.

The S-CNT-Li₆PS₅Cl composite was utilized as a cathode active material.

### Manufacturing of dry cathode film, dry cathode, and all-solid secondary battery

### Example 1: First layer (50 µm)/second layer (50 µm)

### Preparation of two-layer dry cathode film

The Li₂S-LiI-CNF composite prepared in Preparation Example 1 was prepared as a dry cathode active material. Li₆PS₅Cl (D50=3.0 µm, crystalline), which was an argyrodite-type or kind crystal, was prepared as a dry solid electrolyte. PTFE was prepared as a dry binder.

The dry cathode active material and the dry solid electrolyte were prepared at a weight ratio of 80:19, then put into a blade mixer and mixed for 2 minutes to prepare a first mixture.

The first mixture and the dry binder were prepared at a weight ratio of 99:1, then put into a blade mixer, and mixed for 20 seconds to prepare a second mixture.

The second mixture was additionally mixed by utilizing a kneader and then allowed to pass between calender rolls to prepare a self-standing film of a first dry cathode sheet having a thickness of about 50 µm.

In the first dry cathode sheet, a weight ratio of cathode active material:solid electrolyte: binder was 80:19:1. The dry binder was fibrillized during additional mixing and calendering utilizing a kneader.

A second dry cathode sheet was prepared in substantially the same manner as the first dry cathode sheet, except that a weight ratio of a cathode active material, a solid electrolyte, and a binder was changed to 60:39:1.

The second dry cathode sheet was disposed on one surface of the first dry cathode sheet to prepare a two-layer dry cathode film self-standing film having a first dry cathode active material layer/second dry cathode active material layer structure.

### Preparation of dry cathode

A dry cathode was prepared by arranging the two-layer dry cathode film on one surface of a cathode current collector made of aluminum foil having one surface coated with carbon such that the first dry cathode active material layer was in contact with the cathode current collector.

The thickness of the aluminum foil coated with carbon was about 20 µm. The thickness of a carbon coating layer was about 1 µm.

The area of a cathode active material layer (dry cathode film) was equal to the area of the cathode current collector.

### Preparation of anode

SUS (stainless steel) foil having a thickness of 10 µm was prepared as an anode current collector. As an anode active material, CB (carbon black) particles with a primary particle diameter of about 30 nm and silver (Ag) particles with an average particle diameter of about 60 nm were prepared.

4 g of a mixed powder obtained by mixing the CB particles and the silver (Ag) particles at a weight ratio of 3:1 was put into a container, and 4 g of an n-methyl-2-pyrrolidone (NMP) solution including 7 wt% of a PVDF binder (#9300 manufactured by Kureha Corporation) was added thereto to prepare a mixed solution. While NMP was added little by little to the prepared mixed solution, the mixed solution was stirred to prepare a slurry. The prepared slurry was applied onto a SUS sheet by utilizing a bar coater, dried in air at a temperature 80 °C for 10 minutes, and then vacuum-dried at a temperature of 40 °C for 10 hours to prepare a stack. The prepared stack was cold roll-pressed to planarize a surface thereof, thereby preparing an anode having a first anode active material layer/anode current collector structure. The thickness of the first anode active material layer was about 15 µm. The area of the first anode active material layer was equal to the area of the anode current collector.

### Preparation of solid electrolyte layer

A mixture was prepared by adding 1.5 parts by weight of an acrylic-based binder with respect to 98.5 parts by weight of a solid electrolyte to a Li₆PS₅Cl solid electrolyte (D₅₀=3.0 µm, crystalline) which was an argyrodite-type or kind crystal. Octyl acetate was added to the prepared mixture and stirred to prepare a slurry. The prepared slurry was applied onto a 15 µm-thick non-woven fabric placed on a 75 µm-thick PET substrate by utilizing a bar coater and dried in air at a temperature 80 °C for 10 minutes to prepare a stack. The prepared stack was vacuum-dried at a temperature of 80 °C for 2 hours, and then a solid electrolyte layer was separated from the PET substrate and prepared.

### First inactive member

A slurry obtained by mixing a pulp fiber (cellulose fiber), a glass fiber, aluminum hydroxide (Al(OH)₃), an acrylic-based binder, and a solvent was molded into a gasket shape, and then the solvent was removed to prepare a flame-retardant inactive member.

A weight ratio of the pulp fiber (cellulose fiber), the glass fiber, the aluminum hydroxide (Al(OH)₃), and the acrylic-based binder was 20:8:70:2. The thickness of the inactive member was 120 µm.

Before the prepared flame-retardant inactive member was disposed on the solid electrolyte layer, vacuum heat treatment was performed at a temperature 80 °C for 5 hours to remove moisture and/or the like from the flame-retardant inactive member.

### Second inactive member

A second inactive member was prepared in substantially the same manner as the first inactive member, except that a slurry obtained by mixing a pulp fiber (cellulose fiber), a glass fiber, aluminum hydroxide (Al(OH)₃), an acrylic-based binder, and a solvent was molded into a sheet shape.

The second inactive member may serve as an elastic sheet.

### Manufacturing of all-solid secondary battery

Referring to FIG. 7, the solid electrolyte layer was disposed on an anode such that the first anode active material layer was in contact with the solid electrolyte layer, and a cathode was disposed on the solid electrolyte layer. A gasket was disposed around the cathode to surround the cathode and be in contact with the solid electrolyte layer, thereby preparing a stack. The thickness of the gasket was about 120 µm. The above-described flame-retardant inactive member was utilized as the gasket. The gasket was disposed in contact with a side surface of the cathode and the solid electrolyte layer. The cathode was disposed at a central portion of the solid electrolyte layer, and the gasket was disposed to surround the cathode and extend to an end portion of the solid electrolyte layer. The area of the cathode was about 90 % of the area of the solid electrolyte layer, and the gasket was disposed in the remaining 10 % of the entire area of the solid electrolyte layer on which the cathode was not disposed. The gasket may be a first inactive member.

The prepared stack was plate-pressed at a temperature of 85 °C and a pressure of 500 MPa for 30 minutes. Through the plate pressing, the solid electrolyte layer is sintered to improve battery characteristics. The thickness of the sintered solid electrolyte layer was about 45 µm. The density of the Li₆PS₅Cl solid electrolyte, which was an argyrodite-type or kind crystal included in the sintered solid electrolyte layer, was 1.6 g/cc. The area of the solid electrolyte layer was equal to the area of the anode.

A second inactive member having the same area and shape as those of the pressed stack was additionally disposed on an outer surface of the anode current collector of the pressed stack.

The stack to which the second inactive member was added was put into a pouch and vacuum-sealed to manufacture an all-solid secondary battery. Portions of the cathode current collector and the anode current collector were extended to the outside of the sealed battery and utilized as a cathode terminal and an anode terminal.

### Example 2: First layer (60 µm)/second layer (40 µm)

A dry cathode film, a dry cathode, and an all-solid secondary battery were manufactured in substantially the same manner as in Example 1, except that the thickness of a first dry cathode sheet was changed to 60 µm and the thickness of a second dry cathode sheet was changed to 40 µm.

### Example 3: First layer (40 µm)/second layer (60 µm)

A dry cathode film, a dry cathode, and an all-solid secondary battery were manufactured in substantially the same manner as in Example 1, except that the thickness of a first dry cathode sheet was changed to 40 µm and the thickness of a second dry cathode sheet was changed to 60 µm.

### Example 4: First layer (40 µm)/third layer (30 µm)/second layer (40 µm)

A dry cathode film, a dry cathode, and an all-solid secondary battery were manufactured in substantially the same manner as in Example 1, except that the thicknesses of a first dry cathode sheet and a second dry cathode sheet were each changed to 40 µm and a third dry cathode sheet was added between the first dry cathode sheet and the second dry cathode sheet.

The third dry cathode sheet was prepared in substantially the same manner as the first dry cathode sheet, except that a weight ratio of a cathode active material, a solid electrolyte, and a binder was changed to 70:29:1 and a thickness was changed to 30 µm.

### Reference Example 1: Second layer (100 µm)

A dry cathode film, a dry cathode, and an all-solid secondary battery were manufactured in substantially the same manner as in Example 1, except that the thickness of a second dry cathode sheet was changed to 100 µm and a first dry cathode sheet was omitted to prepare the dry cathode film.

### Reference Example 2: First layer (100 µm)

A dry cathode film, a dry cathode, and an all-solid secondary battery were manufactured in substantially the same manner as in Example 1, except that the thickness of a first dry cathode sheet was changed to 100 µm and a second dry cathode sheet was omitted to prepare the dry cathode film.

### Reference Example 3: Third layer (100 µm)

A dry cathode film, a dry cathode, and an all-solid secondary battery were manufactured in substantially the same manner as in Example 1, except that the thickness of a third dry cathode sheet was changed to 100 µm and a first dry cathode sheet and a second dry cathode sheet were omitted to prepare the dry cathode film.

### Comparative Example 1: Single layer (100 µm), S-CNT-Li₆PS₅Cl:PTFE=99:1

An all-solid secondary battery was manufactured in substantially the same manner as in Example 1, except that a dry cathode was prepared in the following manner.

### (Preparation of dry cathode)

The S-CNT-Li₆PS₅Cl composite prepared in Comparative Preparation Example 1 was prepared as a dry cathode active material. PTFE was prepared as a dry binder.

The dry cathode active material and the dry binder were prepared at a weight ratio of 99:1, then put into a blade mixer, and mixed for 5 minutes to prepare a mixture.

The mixture was disposed on one surface of a stainless steel (SUS) substrate and rolled to prepare a dry cathode. The thickness of the dry cathode active material layer was 100 µm.

### Reference Example 4

An all-solid secondary battery was manufactured in substantially the same manner as Example 1, except that a first inactive member was omitted.

### Reference Example 5

An all-solid secondary battery was manufactured in substantially the same manner as Example 1, except that a second inactive member was omitted.

### Evaluation Example 1: XRD analysis and scanning electron microscope analysis

An X-ray diffraction (XRD) spectrum was each measured on bare Li₂S utilized in Preparation Example 1, pulverized Li₂S, and the Li₂S-LiI-CNF composite prepared in Example 1 by utilizing Cu Kα radiation. Measurement results are shown in Table 1. Li₂S crystallite sizes and lattice constants were derived from a first peak for a (111) crystal plane appearing at a diffraction angle 2θ of 27°±2.0° in the XRD spectrum.

The pulverized Li₂S was prepared by milling under the same conditions, except that the mixture including Li₂S and LiI at a weight ratio of 30:20 in the first stage of Example 1 was changed to a mixture including Li₂S at 50 parts by weight. The second stage was not performed.

For the bare Li₂S utilized in Preparation Example 1, the pulverized Li₂S, and the Li₂S-LiI-CNF composite prepared in Example 1, a PSA utilizing a laser was utilized to measure a particle size (for example, a D50 particle size) of a composite, and a scanning electron microscope was utilized to measure a Li₂S particle size of the composite. Measurement results are shown in Table 1.

**Table 1**

| | Li₂S crystallite size [nm] | Li₂S particle size [µm] |
|---|---|---|
| Bare Li₂S | 64.67 | 8 |
| Pulverized Li₂S | 15.42 | - |
| Preparation Example 1 (Li₂S-LiI-CNF composite) | 9.86 | less than 1 |

As shown in Table 1, the Li₂S particle size and crystallite size of the Li₂S-LiI-CNF composite of Preparation Example 1 were considerably reduced as compared with the bare Li₂S.

Although not shown in Table 1, the lattice constant of the Li₂S-LiI-CNF composite of Preparation Example 1 was larger than that of the bare Li₂S.

The increase in the lattice constant of the Li₂S-LiI-CNF composite as compared with the lattice constant of the bare Li₂S was determined to be due to LiI being dissolved in a Li₂S crystal. In some embodiments, it was confirmed that Li₂S and LiI formed a solid solution in the Li₂S-LiI-CNF composite.

Although not shown in Table 1, the particle size of the composite of Preparation Example 1 was about 5 µm.

### Evaluation Example 2: Measurement of tensile strength at break

Tensile strength at break of the dry cathode film prepared in Example 1 was measured according to ASTM D412. Results thereof are shown in Table 2.

A strip specimen with a width of 15 mm and a length of 50 mm was prepared from the prepared dry cathode film, both (e.g., simultaneously) ends of the specimen in a longitudinal direction were grasped with a tensile test device such that a distance between chucks was 10 mm, and then tensile strength was measured under conditions of a temperature of 23 °C and a test speed of 5 mm/min to measure tensile strength at a time point, at which the strip specimen was broken, as the tensile strength at break [kPa]. Measurement results are shown in Table 2.

**Table 2**

| | Tensile strength at break [kPa] |
|---|---|
| Example 1 (first layer (50 µm)/second layer (50 µm)) | 923 |

As shown in Table 2, the dry cathode film of Example 1 showed excellent or suitable tensile strength.

In the dry cathode film of Example 1, the dispersibility of the dry binder was improved, and the uniformity of binding between the cathode active material and the dry binder was improved. In some embodiments, the uniformity of the overall mechanical strength of the dry cathode film of Example 1 was improved.

### Evaluation Example 3: Surface resistivity measurement

The surface resistivity of a first layer disposed adjacent to an electrode current collector in each of the dry cathode films prepared in Example 1 and Comparative Example 1 was measured through a 4-probe method according to ASTM D257. Some results thereof are shown in Table 3.

**Table 3**

| | Surface resistivity [Ω/sq] |
|---|---|
| Example 1 (first layer (50 µm)/second layer (50 µm)) | 32.5 |
| Comparative Example 1 (single layer, S-CNT-Li₆PS₅Cl:PTFE=99:1) | 81.3 |

As shown in Table 3, the surface resistivity of the dry cathode film of Example 1 decreased as compared with the surface resistivity of the dry cathode film of Comparative Example 1.

It was determined that, due to a sulfur (S)-containing composite being utilized as a cathode active material in the dry cathode of Comparative Example 1, the dry cathode film of Comparative Examples had the increased surface resistivity as compared with the dry cathode film of Example 1 utilizing a Li₂S-containing composite as a cathode active material. For example, sulfur (S) has an electronic conductivity of about 10⁻³⁰ S/cm, which is significantly lower than that of Li₂S which is about 10⁻¹³ S/cm.

### Evaluation Example 4: Charge/discharge test

The charge/discharge characteristics of each of the all-solid secondary batteries manufactured in Examples 1 to 4, Reference Examples 1 to 3, and Comparative Example 1 were evaluated through the following charge/discharge test. The charge/discharge test was performed by put the all-solid secondary battery into a thermostatic bath at a temperature of 45 °C.

At a first cycle, the all-solid secondary batteries were each charged at a constant current of 0.05 C for 20 hours until a battery voltage reached 2.8 V. Subsequently, the all-solid secondary batteries were each discharged at a constant current of 0.05 C for 20 hours until the battery voltage reached 1.0 V.

At a second cycle, the all-solid secondary batteries were each charged at a constant current of 0.1 C for 20 hours until a battery voltage reached 2.8 V. Subsequently, the all-solid secondary batteries were each discharged at a constant current of 0.1 C for 10 hours until the battery voltage reached 1.0 V.

After the second cycle, charging and discharging were performed up to a 20^{th} cycle under the same conditions as the second cycle. Measurement results are shown in Table 4. Capacity retention ratio is represented by Equation 1. capacity retention ratio [%] = [20th cycle discharge capacity / first cycle charge capacity] × 100

**Table 4**

| | Discharge capacity at second cycle (0.1 C) [mAh/g] | Capacity retention ratio [%] |
|---|---|---|
| Example 1 (first layer (50 µm)/second layer (50 µm)) | 949 | 88.2 |
| Example 2 (first layer (60 µm)/second layer (40 µm)) | 950 | 89.1 |
| Example 3 (first layer (40 µm)/second layer (60 µm)) | 947 | 88.6 |
| Example 4 (first layer (40 µm)/third layer (30 µm)/second layer (40 µm)) | 961 | 89.5 |
| Reference Example 1 (second layer (100 µm) alone) | 915 | 86.5 |
| Reference Example 2 (first layer (100 µm) alone) | 939 | 80.7 |
| Reference Example 3 (third layer (100 µm) alone) | 868 | 84.2 |
| Comparative Example 1 (single layer, dry type or kind, S-CNT-Li₆PS₅Cl:PTFE=99:1) | 670 | 72.2 |

As shown in Table 4, the all-solid secondary batteries of Examples 1 to 4 utilizing the dry cathode each exhibited improved discharge capacity and lifespan characteristics as compared with the all-solid secondary batteries of Comparative Example 1 and Reference Examples 1 to 3 having a single-layer structure.

The all-solid secondary batteries of Examples 1 to 4 utilizing a Li₂S-LiI-CNF composite cathode active material each exhibited improved discharge capacity and lifespan characteristics as compared with the all-solid secondary battery of Comparative Example 1 utilizing an S-CNT-Li₆PS₅Cl composite cathode active material.

It was confirmed that Li₂S had a reduced specific surface area and increased electronic conductivity as compared with sulfur (S) and thus provided improved charge/discharge characteristics.

Although not shown in Table 4, the all-solid secondary battery of Reference Example 4 from which the first inactive member was omitted and the all-solid secondary battery of Reference Example 5 from which the second inactive member was omitted each had relatively low lifespan characteristics as compared with the all-solid secondary battery of Example 1.

It was also confirmed that, after initial charging in the all-solid secondary batteries of Examples 1 to 4, a second anode active material layer was formed as a lithium metal layer between a first anode active material layer and an anode current collector. The formation of the second dry cathode active material layer was confirmed through a cross-sectional scanning electron microscope image of the all-solid secondary battery.

According to one or more aspects of embodiments, there may be provided a dry cathode film which includes a composite of Li₂S, a lithium salt, and a carbon-based material and a dry binder that binding Li₂S, the lithium salt, and the carbon-based material and includes a plurality of cathode active material layers having different compositions to have improved mechanical properties and reduced resistivity.

There may be provided an all-state secondary battery which includes such a dry cathode film to have increased specific capacity and cycle characteristics.

In present disclosure, the terms "fibril" or "fibrils" as utilized herein may refer to the fibrous shape of a substance that has a larger aspect ratio than a particulate of said substance. As utilized herein, the terms "fibrillized" and "fibrillize" may refer to a process of converting (e.g., by grinding or pulverizing) particulates of a substance into fibrous shape (i.e., fibrils) of said substance that has higher aspect ratio than the particulates.

As utilized herein, the terms "substantially," "about," and similar terms are used as terms of approximation and not as terms of degree, and are intended to account for the inherent deviations in measured or calculated values that would be recognized by those of ordinary skill in the art.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

The battery module, battery pack, battery management system, electric vehicle, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or more suitable changes in form and details may be made therein without departing from the spirit and scope of the present disclosure as defined by the appended claims and equivalents thereof.

The present invention may be defined by reference to the following clauses:
Clause 1. A dry cathode film configured to be disposed on a cathode current collector, the dry cathode film comprising:
   a first dry cathode active material layer disposed adjacent to the cathode current collector; and
   a second dry cathode active material layer disposed on the first dry cathode active material layer,
   wherein the first dry cathode active material layer and the second dry cathode active material layer each independently comprise a dry cathode active material, a dry sulfide-based solid electrolyte, and a dry binder,
   wherein the dry cathode active material comprises a composite of Li₂S, a lithium salt, and a carbon-based material,
   a content of the dry cathode active material in the first dry cathode active material layer is greater than a content of the dry cathode active material in the second dry cathode active material layer, and
   a content of the dry sulfide-based solid electrolyte in the first dry cathode active material layer is less than a content of the dry sulfide-based solid electrolyte in the second dry cathode active material layer.
Clause 2. The dry cathode film of clause 1, wherein a thickness of the first dry cathode active material layer is different from a thickness of the second dry cathode active material layer, and
   the thickness of the first dry cathode active material layer is less than or greater than the thickness of the second dry cathode active material.
Clause 3. The dry cathode film of clause 1 or clause 2, wherein a ratio of the thickness of the first dry cathode active material layer to the thickness of the second dry cathode active material layer is in a range of about 9:1 to about 1:9.
Clause 4. The dry cathode film of any one of clauses 1 to 3, further comprising at least one third dry cathode active material layer disposed between the first dry cathode active material layer and the second dry cathode active material layer.
Clause 5. The dry cathode film of any one of clauses 1 to 4, wherein a thickness of the at least one third dry cathode active material layer is less than or greater than a thickness of the first dry cathode active material layer or a thickness of the second dry cathode active material layer.
Clause 6. The dry cathode film of any one of clauses 1 to 5, wherein a ratio of the thickness of the at least one third dry cathode active material layer to the thickness of the first dry cathode active material layer or the second dry cathode active material layer is in a range of about 9:1 to about 1:9.
Clause 7. The dry cathode film of any one of clauses 1 to 6, wherein the dry cathode film has a gradient of a dry cathode active material concentration in a thickness direction of the dry cathode film, wherein the dry cathode active material concentration continuously or discontinuously decreases in the thickness direction of the dry cathode film from a first surface adjacent to the cathode current collector,
   the dry cathode film has a gradient of a dry sulfide-based solid electrolyte concentration in the thickness direction of the dry cathode film, wherein the dry sulfide-based solid electrolyte concentration continuously or discontinuously increases in the thickness direction of the dry cathode film from the first surface adjacent to the cathode current collector, or
   the dry cathode film has a gradient of a dry binder concentration in the thickness direction of the dry cathode film, wherein the dry binder concentration continuously or discontinuously increases in the thickness direction of the dry cathode film from the first surface adjacent to the cathode current collector.
Clause 8. The dry cathode film of any one of clauses 1 to 7, wherein the composite of the Li₂S, the lithium salt, and the carbon-based material is represented by Li₂S-LiₐX_{b}-C (wherein 1≤a≤5 and 1≤b≤5),
   wherein X is I, Br, Cl, F, H, O, Se, Te, N, P, As, Sb, Al, B, OCl, PF₆, BF₄, SbF₆, AsF₆, ClO₄, AlO₂, AlCl₄, NO₃, CO₃, BH₄, SO₄, BO₃, PO₄, NCl, NCl₂, BN₂, or a combination thereof,
   a size of a Li₂S crystallite obtained from an X-ray diffraction (XRD) spectrum of the composite is 20 nm or less, and
   the composite comprises a solid solution of the Li₂S and the lithium salt.
Clause 9. The dry cathode film of any one of clauses 1 to 8, wherein the carbon-based material comprises a fibrous carbon-based material,
   the fibrous carbon-based material comprises carbon nanostructures, the carbon nanostructures comprise carbon nanofibers, carbon nanotubes, carbon nanobelts, carbon nanorods, or a combination thereof, and
   a content of the carbon-based material is in a range of about 1 wt% to about 20 wt% of a total weight of the composite.
Clause 10. The dry cathode film of any one of clauses 1 to 9, wherein the sulfide-based solid electrolyte comprises at least one selected from: Li₂S-P₂S₅ and Li₂S-P₂S₅-LiX, wherein X is a halogen element; Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, and Li₂S-P₂S₅-ZₘSₙ, wherein m and n are each a positive number, and Z is one of Ge, Zn, and Ga; Li₂S-GeS₂, Li₂S-SiS₂-Li₃PO₄, and Li₂S-SiS₂-LiₚMO_{q}, wherein p and q are each a positive number, and M is one of P, Si, Ge, B, Al, Ga, and In; Li₇₋ₓPS₆₋ₓClₓ, wherein 0<x<2; Li₇₋ₓPS₆₋ₓBrₓ, wherein 0<x<2; and Li₇₋ₓPS₆₋ₓIₓ, wherein 0≤x≤2, and comprises an argyrodite-type solid electrolyte,
   wherein the argyrodite-type solid electrolyte comprises at least one selected from Li₆PS₅Cl, Li₆PS₅Br, and Li₆PS₅I, and has a density of about 1.5 g/cc to about 2.0 g/cc.
Clause 11. The dry cathode film of any one of clauses 1 to 10, wherein the dry binder comprises a fibrillized binder and a fluorine-based binder,
   a glass transition temperature (T_{g}) of the dry binder is in a range of about 15 °C to about 130 °C, and
   a content of the dry binder is in a range of about 0.1 wt% to about 5 wt% with respect to a total weight of the dry cathode film.
Clause 12. The dry cathode film of any one of clauses 1 to 11, wherein the dry cathode film is a self-standing film, is free of a residual process solvent, and has a thickness of about 50 µm to about 500 µm and a tensile strength of about 500 kPa to about 5,000 kPa.
Clause 13. The dry cathode film of any one of clauses 1 to 12, further comprising at least one of a first inactive member disposed on one side surface of the cathode and a second inactive member disposed on another surface of the anode current collector,
   wherein the first inactive member and the second inactive each comprise a conductive flame-retardant inactive member.
Clause 14. A dry cathode comprising:
   a cathode current collector; and
   the dry cathode film of any one of clauses 1 to 13 disposed on one surface or two surfaces of the cathode current collector.
Clause 15. The dry cathode of clause 14, wherein the cathode current collector comprises a base film and a metal layer disposed on one surface or two surfaces of the base film,
   wherein the base film comprises a polymer, wherein the polymer comprises polyethylene terephthalate (PET), polyethylene (PE), polypropylene (PP), polybutylene terephthalate (PBT), polyimide (PI), or a combination thereof, and the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and
   the dry cathode further comprises an interlayer disposed between the cathode current collector and the dry cathode film, wherein the interlayer comprises a carbon-based conductive material.
Clause 16. An all-solid secondary battery comprising:
   a cathode;
   an anode; and
   an electrolyte layer disposed between the cathode and the anode,
   wherein the cathode is the dry cathode of clauses 14 or clause 15, and
   the anode comprises an anode current collector and a first anode active material layer disposed on one surface of the anode current collector.
Clause 17. The all-solid secondary battery of clause 16, wherein the first anode active material layer comprises an anode active material and a binder,
   wherein the anode active material has a particle form and has an average particle diameter of 4 µm or less.
Clause 18. The all-solid secondary battery of clause 16 or clause 17, wherein the anode active material comprises at least one selected from a carbon-based anode active material and a metal or metalloid anode active material,
   wherein the carbon-based anode active material comprises amorphous carbon, crystalline carbon, porous carbon, or a combination thereof, and
   the metal or metalloid anode active material comprises gold (Au), platinum (Pt), palladium (Pd), silicon (Si), silver (Ag), aluminum (Al), bismuth (Bi), tin (Sn), zinc (Zn), or a combination thereof, and
   the anode active material comprises a mixture of first particles containing amorphous carbon and second particles containing a metal or metalloid, wherein a content of the second particles is in a range of about 1 wt% to about 60 wt% with respect to a total weight of the mixture.
Clause 19. The all-solid secondary battery of any one of clauses 16 to 18, further comprising a second anode active material layer disposed between the anode current collector and the first anode active material layer or between the anode current collector and the electrolyte layer,
   wherein the second anode active material layer is a metal layer, and the metal layer comprises lithium or a lithium alloy.
Clause 20. The all-solid secondary battery of any one of clauses 16 to 19, wherein the electrolyte layer further comprises a solid electrolyte, a gel electrolyte, or a combination thereof,
   wherein the solid electrolyte comprises a sulfide-based solid electrolyte, an oxide-based solid electrolyte, a polymer solid electrolyte, or a combination thereof, and
   the gel electrolyte comprises a polymer gel electrolyte.

## Claims

1. A dry cathode film (100) configured to be on a cathode current collector (11), the dry cathode film (100) comprising:
a first dry cathode active material layer (110) adjacent to the cathode current collector (11); and
a second dry cathode active material layer (120) on the first dry cathode active material layer (110),
wherein the first dry cathode active material layer (110) and the second dry cathode active material layer (120) each independently comprise a dry cathode active material, a dry sulfide-based solid electrolyte, and a dry binder, and
wherein
the dry cathode active material comprises a composite of Li₂S, a lithium salt, and a carbon-based material,
a content of the dry cathode active material in the first dry cathode active material layer (110) is greater than a content of the dry cathode active material in the second dry cathode active material layer (120), and
a content of the dry sulfide-based solid electrolyte in the first dry cathode active material layer (110) is less than a content of the dry sulfide-based solid electrolyte in the second dry cathode active material layer (120).

2. The dry cathode film (100) as claimed in claim 1, wherein
a thickness of the first dry cathode active material layer (110) is different from a thickness of the second dry cathode active material layer (120), and
the thickness of the first dry cathode active material layer (110) is either less than or greater than the thickness of the second dry cathode active material layer (120) and/or a ratio of a thickness of the first dry cathode active material layer (110) to a thickness of the second dry cathode active material layer (120) is in a range of about 9:1 to about 1:9.

3. The dry cathode film (100) as claimed in claim 1 or 2, further comprising at least one third dry cathode active material layer (130) between the first dry cathode active material layer (110) and the second dry cathode active material layer (120).

4. The dry cathode film (100) as claimed in any of the claims 1 to 3, wherein
a thickness of the at least one third dry cathode active material layer (130) is different from a thickness of the first dry cathode active material layer (110) or is different from a thickness of the second dry cathode active material layer (120), and
the thickness of the at least one third dry cathode active material layer (130) is either less than or greater than the thickness of the first dry cathode active material layer (110) or is either less than or greater the thickness of the second dry cathode active material layer (120)
and/or wherein a ratio of a thickness of the at least one third dry cathode active material layer (130) to a thickness of the first dry cathode active material layer (110) or to a thickness of the second dry cathode active material layer (120) is in a range of about 9:1 to about 1:9.

5. The dry cathode film (100) as claimed in any of the claims 1 to 4, wherein
the dry cathode film (100) has a gradient of a dry cathode active material concentration in a thickness direction of the dry cathode film (100), the dry cathode active material concentration continuously or discontinuously decreasing in the thickness direction of the dry cathode film (100) from a first surface of the dry cathode film (100), the first surface being adjacent to the cathode current collector (11),
the dry cathode film (100) has a gradient of a dry sulfide-based solid electrolyte concentration in the thickness direction of the dry cathode film (100), the dry sulfide-based solid electrolyte concentration continuously or discontinuously increasing in the thickness direction of the dry cathode film (100) from the first surface adjacent to the cathode current collector (11), and/or
the dry cathode film (100) has a gradient of a dry binder concentration in the thickness direction of the dry cathode film (100), the dry binder concentration continuously or discontinuously increasing in the thickness direction of the dry cathode film (100) from the first surface adjacent to the cathode current collector (11).

6. The dry cathode film (100) as claimed in any of the claims 1 to 5, wherein the composite of the Li₂S, the lithium salt, and the carbon-based material is represented by Li₂S-LiₐX_{b}-C (wherein 1≤a≤5 and 1≤b≤5), and
wherein
X is I, Br, Cl, F, H, O, Se, Te, N, P, As, Sb, Al, B, OCI, PF₆, BF₄, SbF₆, AsF₆, ClO₄, AlO₂, AlCl4, NOs, COs, BH₄, SO₄, BOs, PO₄, NCI, NCl₂, BN₂, or a combination thereof,
a size of a Li₂S crystallite obtained from an X-ray diffraction (XRD) spectrum of the composite is 20 nm or less, and
the composite comprises a solid solution of the Li₂S and the lithium salt.

7. The dry cathode film (100) as claimed in any of the claims 1 to 6, wherein
the carbon-based material comprises a fibrous carbon-based material,
the fibrous carbon-based material comprises carbon nanostructures, the carbon nanostructures comprising carbon nanofibers, carbon nanotubes, carbon nanobelts, carbon nanorods, or a combination thereof, and
a content of the carbon-based material is in a range of about 1 wt% to about 20 wt% of a total weight of the composite.

8. The dry cathode film (100) as claimed in any of the claims 1 to 7, wherein the dry sulfide-based solid electrolyte comprises at least one selected from among: Li₂S-P₂S₅; Li₂S-P₂S₅-LiX, wherein X is a halogen element; Li₂S-P₂S₅-Li₂O; Li₂S-P₂S₅-Li₂O-LiI; Li₂S-SiS₂; Li₂S-SiS₂-LiI; Li₂S-SiS₂-LiBr; Li₂S-SiS₂-LiCl; Li₂S-SiS₂-B₂S₃-LiI; Li₂S-SiS₂-P₂S₅-LiI; Li₂S-B₂S₃; Li₂S-P₂S₅-ZₘSₙ, wherein m and n are each a positive number, and Z is one of Ge, Zn, and Ga; Li₂S-GeS₂; Li₂S-SiS₂-Li₃PO₄; Li₂S-SiS₂-LiₚMO_{q}, wherein p and q are each a positive number, and M is one of P, Si, Ge, B, Al, Ga, and In; Li₇₋ₓPS₆₋ₓClₓ, wherein 0<x<2; Li₇₋ₓPS₆₋ₓBrₓ, wherein 0<x<2; and Li₇₋ₓPS₆₋ₓIₓ, wherein 0≤x≤2, and is an argyrodite-type solid electrolyte, and
wherein the argyrodite-type solid electrolyte comprises at least one selected from among Li₆PS₅Cl, Li₆PS₅Br, and LisPSsl, and has a density of about 1.5 g/cc to about 2.0 g/cc.

9. The dry cathode film (100) as claimed any of the claims 1 to 8, wherein
the dry binder comprises a fibrillized binder and a fluorine-based binder,
a glass transition temperature (T_{g}) of the dry binder is in a range of about 15 °C to about 130 °C, and
a content of the dry binder is in a range of about 0.1 wt% to about 5 wt% with respect to a total weight of the dry cathode film (100).

10. The dry cathode film (100) as claimed any of the claims 1 to 9, wherein the dry cathode film (100) is a self-standing film, is free of a residual process solvent, and has a thickness of about 50 µm to about 500 µm and a tensile strength of about 500 kPa to about 5,000 kPa.

11. A dry cathode (10) comprising:
a cathode current collector (11); and
the dry cathode film (100) as claimed in claim 1 on at least one surface of the cathode current collector (11).

12. The dry cathode as claimed in claim 11, wherein the cathode current collector (11) comprises a base film and a metal layer on at least one surface of the base film,
wherein
the base film comprises a polymer, the polymer comprising polyethylene terephthalate, polyethylene, polypropylene, polybutylene terephthalate, polyimide (PI), or a combination thereof, and
the metal layer comprises indium, copper, magnesium, stainless steel, titanium, iron, cobalt, nickel, zinc, aluminum, germanium, lithium, or an alloy thereof, and
wherein the dry cathode further comprises an interlayer between the cathode current collector (11) and the dry cathode film (100), the interlayer comprising a carbon-based conductive material.

13. An all-solid secondary battery (1) comprising:
a cathode (10);
an anode (20); and
an electrolyte layer (30) between the cathode (10) and the anode (20),
wherein the cathode (10) is the dry cathode (10) as claimed in claim 11 or 12, and
the anode (20) comprises an anode current collector (21) and a first anode active material layer (22) on a surface of the anode current collector (21);
and optionally further comprising at least one of
a first inactive member on one side surface of the cathode (10) or
a second inactive member on another surface of the anode current collector (21) opposite the surface of the anode current collector (21) on which the first anode active material layer (22) is disposed,
wherein the first inactive member and the second inactive member each comprise a conductive flame-retardant inactive member.

14. The all-solid secondary battery as claimed in claim 13, wherein the first anode active material layer (22) comprises an anode active material and a binder, and
wherein the anode active material is in a form of particles having an average particle diameter of 4 µm or less and/or
the anode active material comprises at least one selected from among a carbon-based anode active material and a metal or metalloid anode active material,
wherein
the carbon-based anode active material comprises amorphous carbon, crystalline carbon, porous carbon, or a combination thereof, and
the metal or metalloid anode active material comprises gold, platinum, palladium, silicon, silver, aluminum, bismuth, tin, zinc, or a combination thereof, and
wherein the anode active material comprises a mixture of first particles containing amorphous carbon and second particles containing a metal or metalloid, a content of the second particles being in a range of about 1 wt% to about 60 wt% with respect to a total weight of the mixture and/or
further comprising a second anode active material layer between the anode current collector (21) and the first anode active material layer (22) or between the anode current collector (21) and the electrolyte layer (30),
wherein the second anode active material layer is a metal layer, the metal layer comprising lithium or a lithium alloy.

15. The all-solid secondary battery as claimed in claim 13 or 14, wherein the electrolyte layer (30) comprises a solid electrolyte, a gel electrolyte, or a combination thereof, and
wherein
the solid electrolyte comprises a sulfide-based solid electrolyte, an oxide-based solid electrolyte, a polymer solid electrolyte, or a combination thereof, and
the gel electrolyte comprises a polymer gel electrolyte.
